(19) Europäisches Patentamt
European Patent Office
Office européen des brevets

(11) EP 1 647 575 B1

(12) **EUROPEAN PATENT SPECIFICATION**

(45) Date of publication and mention of the grant of the patent:
**29.07.2009 Bulletin 2009/31**

(21) Application number: **03817212.8**

(22) Date of filing: **11.11.2003**

(51) Int Cl.:
***C08L 53/00*** *(2006.01)*

(86) International application number:
**PCT/JP2003/014309**

(87) International publication number:
**WO 2004/113442 (29.12.2004 Gazette 2004/53)**

(54) **POLYPROPYLENE RESIN COMPOSITION**

POLYPROPYLENHARZZUSAMMENSETZUNG

COMPOSITION DE RESINE DE POLYPROPYLENE

(84) Designated Contracting States:
**TR**

(30) Priority: **24.06.2003 JP 2003180149**

(43) Date of publication of application:
**19.04.2006 Bulletin 2006/16**

(73) Proprietor: **Prime Polymer Co., Ltd.**
**Tokyo 105-7117 (JP)**

(72) Inventors:
- **SAKAI, Ikunori,**
**c/o MITSUI CHEMICALS, INC.**
**Sodegaura-shi, Chiba 299-0265 (JP)**
- **NAITO, Masamichi,**
**c/o MITSUI CHEMICALS, INC.**
**Sodegaura-shi, Chiba 299-0265 (JP)**
- **TAKASAKI, Yasufumi,**
**c/o MITSUI CHEMICALS, INC.**
**Sodegaura-shi, Chiba 299-0265 (JP)**
- **UENO, Kouhei,**
**c/o MITSUI CHEMICALS, INC.**
**Sodegaura-shi, Chiba 299-0265 (JP)**
- **MINODA, Takeshi,**
**c/o MITSUI CHEMICALS, INC.**
**Sodegaura-shi, Chiba 299-0265 (JP)**
- **HASHIMOTO, Mikio,**
**c/o MITSUI CHEM.AN.CONS.SERV.INC**
**Kuga-gun, Yamaguchi 740-0061 (JP)**
- **ITAKURA, Keita,**
**c/o MITSUI CHEMICALS, INC.**
**Sodegaura-shi, Chiba 299-0265 (JP)**

(74) Representative: **HOFFMANN EITLE**
**Patent- und Rechtsanwälte**
**Arabellastrasse 4**
**81925 München (DE)**

(56) References cited:

| | |
|---|---|
| **EP-A- 0 881 259** | **EP-A1- 0 792 914** |
| **EP-A1- 1 302 508** | **JP-A- 7 286 022** |
| **JP-A- 8 127 625** | **JP-A- 9 227 735** |
| **JP-A- 2001 072 828** | **JP-A- 2001 151 978** |
| **JP-A- 2001 172 466** | **JP-A- 2001 181 473** |
| **JP-A- 2002 155 188** | **JP-A- 2002 249 635** |
| **JP-A- 2003 041 088** | **JP-A- 2003 253 084** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 647 575 B1

## Description

## FIELD OF THE INVENTION

The present invention relates to a polypropylene resin composition, and more particularly to a polypropylene resin composition having excellent mechanical properties and capable of forming molded articles having excellent appearance such as free from flow mark or weld mark.

## BACKGROUND OF THE INVENTION

Polypropylene resin compositions are used in various fields such as automobile parts, mechanical parts and electrical parts, and to the compositions, various additives are added according to the properties required. For example, in the field of automobile parts where mechanical strength is required, a polypropylene composition obtained by incorporating an elastomer and talc in a crystalline propylene block copolymer is used. Especially in the case where high impact resistance is required, a large amount of an elastomer component is incorporated to improve mechanical properties. JP-A-09-227735 discloses a propylene-based resin composition comprising (A) 40-90 wt.-% of a propylene-based polymer composed of (1) 99-60 wt.-% of decane insolubles (at 64°C) having a limiting viscosity [η] of 0.8-5.0 dl/g and (2) 1-40 wt.-% of decane solubles (at 64°C) with [η] of 2.0-20 dl/g and containing 5-29 mol-% of units derived from ethylene and (B) 10-35 wt.-% of (B-1) and an ethylene-based copolymer having a viscosity [η] of 1.5-3.0 dl/g and/or (B-2) a styrene-based block copolymer having a melt-flow rate of 0.01-10 g/10 min. The resin further optionally comprises (C) an inorganic filler and/or (D) a nucleating agent.

JP-A-2003-253084 discloses a resin composition composed of 55-95 wt.-% of a crystalline propylene ethylene block copolymer and 4-45 wt.-% of an ethylene α-olefin copolymer. The portion of the polymer insoluble in n-decane has a melt-flow rate of 30-300 and a ratio of Mz/Mw of 5.0 or more. The resin composition is suitable for manufacturing injection-molded foamed articles having a higher rigidity and penetration impact strength.

EP-A-0 881 259 discloses a polypropylene resin composition for use in automotive inner and outer trims. The composition comprises 50-85 wt.-% of a crystalline polypropylene (A) having a melt-flow rate of 7-70 g/10 min, 2-16 wt.-% of a hydrogenated block copolymer (B) obtained by hydrogenating a specific aromatic vinyl/conjugated diene block copolymer, and optionally up to 16 wt.-% of a hydrogenated block copolymer (C), up to 10 wt.-% of an aromatic hydrocarbon copolymer (D), up to 10 wt.-% of crystalline polyethylene (E), up to 10 wt.-% of soft ethylene/α-olefin copolymer (F) and further contains 5-25 wt.-% of an inorganic filler (G) having an average particle size of 0.1-3 μm.

EP-A-1 302 508 relates to automotive parts made of a polypropylene resin composition comprising a propylene homopolymer (A1), an elastomer (B) and an inorganic filler (C) or comprising a propylene block copolymer (A2) and an inorganic filler (C), optionally together with an elastomer (B). (A1) or the propylene homopolymer segment of (A2) has a melt-flow rate at 200-30°C of 22-300 g/10 min, a ratio of Mw/Mn of 1-3 and an amount of irregular units derived from 2.1-insertion or 1.3-insertion of propylene monomers relative to all propylene units of 0.2% or less each, measured by $^{13}C$-NMR spectroscopy.

EP-A-0 792 914 describes a polyolefin composition comprising 45-90 parts of a propylene polymer (A) having a viscosity [η] of 0.5-10 dl/g and a Tm of 100°C or more, which comprises 100-80 mol-% propylene, 0-10 mol-% ethylene and 0-50 mol-% $C_{4-12}$ α-olefins, 5-40 parts of an ethylene α-olefin copolymer (B) having a [η] value of 0.5-10 dl/g and comprising 70-95 mol-% ethylene and 5-30 mol-% $C_{4-12}$ α-olefins, and 2-25 parts of a propylene α-olefin ethylene terpolymer (C) having an [η] of 0.5-10 dl/g and comprising 40-77 mol-% propylene, 20-40 mol-% $C_{4-12}$ α-olefin and 2-20 mol-% ethylene. The polyolefin composition and articles molded from this composition have a good flexibility, transparency, mechanical strength and heat resistance.

However, it has turned out that when a composition obtained by incorporating an elastomer in the crystalline propylene block copolymer is molded into a-part by the use of a large injection molding machine for producing practical parts, impact strength of the part is lowered as the residence time is increased.

It is an object of the present invention to provide a polypropylene resin composition having excellent mechanical properties and capable of forming molded articles having excellent appearance such as free from flow mark or weld mark.

## DISCLOSURE OF THE INVENTION

The present inventors have studied causes of the above phenomenon. As a result, they have found that because compatibility of the elastomer component with the polypropylene matrix is insufficient, the elastomer component is separated and aggregated when the composition is during residence in a molten state in the molding machine, and consequently, lowering of impact strength or defects of appearance of the molded article are brought about.

The present inventors have further studied methods to prevent separation and aggregation of the elastomer occurring when the elastomer-containing crystalline propylene block copolymer composition is during residence in a

molten state in the molding machine. As a result, they have found that the above problem can be solved by the use of a specific propylene block copolymer. Based on the finding, the present invention has been accomplished.

That is to say, there is provided by the first invention:

a polypropylene resin composition comprising:

(A) a crystalline propylene block copolymer in an amount of 94 to 55% by weight, which comprises (d1) a room temperature n-decane-insoluble portion and (d2) a room temperature n-decane-soluble portion, and a content of the room temperature n-decane-soluble portion (d2) is 15 to 35% by weight, and has a melt flow rate (MFR, ASTM D 1238, measured at 230°C under a load of 2160 g, the same shall apply hereinafter) in the range of 5 to 80 g/10min,
(B) an elastomeric polymer in an amount of 1 to 20% by weight, and
(C) an inorganic filler in an amount of 5 to 25% by weight;

and having the following properties:

a ratio of an Izod impact strength (J/m, $IZ_{250-30}$) of a specimen obtained by maintaining the composition at 250°C for 30 minutes in a molten state in a 10 oz injection molding machine and then molding the composition in accordance with the method of ASTM D 256, said Izod impact strength being measured after 48 hours from the molding, to an Izod impact strength (J/m, $IZ_{230-3}$) of a specimen obtained by maintaining the composition at 230°C for 3 minutes in a molten state in the same injection molding machine and then molding the composition by the same method, said Izod impact strength being measured in the same manner as above, satisfies the following formula:

$$1.0 \geq (IZ_{250-30}/IZ_{230-3}) \geq 0.5.$$

There is provided by the second invention:

the polypropylene.resin composition of the first invention, wherein the room temperature n-decane-insoluble portion (d1) has MFR in the range of 10 to 300 g/10min and Mz/Mw (Mz: Z average molecular weight, Mw: weight-average molecular weight), as measured by a gel permeation chromatograph (GPC) method, of not less than 3.0.

There is provided by the third invention:

the polypropylene resin composition of the first invention or the second invention, wherein the room temperature n-decane-insoluble portion (d1) comprises (a-1) a high-molecular weight polypropylene having an intrinsic viscosity [η], as measured in decalin at 135°C, of 6 to 13 dl/g, in an amount of 0.5 to 10% by weight, and (a-2) a low-molecular weight polypropylene having an intrinsic viscosity [η], as measured in decalin at 135°C, of less than 6 dl/g, in an amount of 99.5 to 90% by weight.

There is provided by the fourth invention:

the polypropylene resin composition of any one of the first invention to the third invention, wherein the room temperature n-decane-insoluble portion (d1) has an isotactic pentad fraction (mmmm), as measured by $^{13}C$-NMR, of not less than 97%.

There is provided by the fifth invention:

the polypropylene resin composition of any one of the first invention to the fourth invention, wherein the room temperature n-decane-soluble portion (d2) is a propylene/ethylene random copolymer having an ethylene content of 20 to 50% by mol and an intrinsic viscosity [η], as measured in decalin at 135°C, in the range of 1 to 5 dl/g.

There is provided by the sixth invention:

the polypropylene resin composition of the first invention, wherein the crystalline propylene block copolymer (A) is a composition of (A-1) a crystalline propylene block copolymer in an amount of 99.5 to 80% by weight and (A-2) a

propylene homopolymer and/or (A-3) a propylene random copolymer in an amount of 0.5 to 20% by weight.

There is provided by the seventh invention:

the polypropylene resin composition of the sixth invention, wherein the propylene homopolymer (A-2) and the propylene random copolymer (A-3) are each a composition comprising:

(a-1) high-molecular weight polypropylene having an intrinsic viscosity [η], as measured in decalin at 135°C, of 6 to 13 dl/g, in an amount of 10 to 80% by weight, and
(a-2) low-molecular weight polypropylene having an intrinsic viscosity [η], as measured in decalin at 135°C, of less than 6 dl/g, in an amount of 90 to 20% by weight.

There is provided by the eighth invention:

the polypropylene resin composition of the seventh invention, wherein the propylene homopolymer (A-2) and the propylene random copolymer (A-3) are each a composition comprising:

(a-1) high-molecular weight polypropylene having an intrinsic viscosity [η], as measured in decalin at 135°C, of 6 to 13 dl/g, in an amount of 10 to 35% by weight, and
(a-2) low-molecular weight polypropylene having an intrinsic viscosity [η], as measured in decalin at 135°C, of less than 6 dl/g, in an amount of 90 to 65% by weight.

There is provided by the ninth invention:

the polypropylene resin composition of the sixth invention, wherein the crystalline propylene block copolymer (A-1) comprises (d1) a room temperature n-decane-insoluble portion and (d2) a room temperature n-decane-soluble portion, and a content of the room temperature n-decane-soluble portion (d2) is 17 to 35% by weight, and has MFR in the range of 10 to 100 g/10min

There is provided by the tenth invention:

the polypropylene resin composition of any one of the first invention to the ninth invention, wherein the elastomeric polymer (B) is a copolymer of ethylene and an $\alpha$-olefin of 4 to 10 carbon atoms.

There is provided by the eleventh invention:

the polypropylene resin composition of any one of the first invention to the tenth invention, wherein the elastomeric polymer (B) has MFR of 0.5 to 30 g/10min.

There is provided by the twelfth invention:

the polypropylene resin composition of any one of the first invention to the eleventh invention, wherein the inorganic filler (C) is talc.

## PREFERRED EMBODIMENTS OF THE INVENTION

The polypropylene resin composition according to the present invention is described in detail hereinafter.
The polypropylene resin composition of the present invention comprises:

(A) a crystalline propylene block copolymer,
(B) an elastomeric polymer, and
(C) an inorganic filler.

First, the components for forming the polypropylene resin composition of the present invention are described.

<u>(A) Crystalline propylene block copolymer</u>

The crystalline propylene block copolymer (A) for use in the present invention is a block copolymer obtained

from propylene and at least one olefin selected from olefins other than propylene.

Examples of other olefins include ethylene, α-olefins of 4 to 20 carbon atoms, vinyl compounds, vinyl esters, unsaturated organic acids or their derivatives, conjugated dienes, and non-conjugated polyenes.

In the crystalline propylene block copolymer (A), a homopolymer or copolymer of branched olefins, such as 3-methyl-1-butene, 3,3-dimethyl-1-butene, 3-methyl-1-pentene, 3-ethyl-1-pentene, 4-methyl-1-pentene, 3-methyl-1-hexene, 4-methyl-1-hexene, 4,4-dimethyl-1-hexene, 4,4-dimethyl-1-pentene, 4-ethyl-1-hexene, 3-ethyl-1-hexene, 3,5,5-trimethyl-1-hexene, vinylcyclopentane, vinylcyclohexane, vinylcycloheptane, vinylnorbornane, allylnorbornane, styrene, dimethylstyrene, allylbenzene, allyltoluene, allylnaphthalene and vinylnaphthalene, may be contained in an amount of not more than 0.1% by weight, preferably not more than 0.05% by weight. Of these, a homopolymer or copolymer of 3-methyl-1-butene is preferable. The homopolymer or copolymer of the branched olefin is preferably contained as a prepolymer.

When the crystalline propylene block copolymer (A) is subjected to n-decane solvent fractionation, this copolymer is fractionated into a component (d2) that is soluble in n-decane at room temperature (room temperature n-decane-soluble portion (d2)) and a component (d1) that is insoluble in n-decane at room temperature (room temperature n-decane-insoluble portion (d1)). The content of the room temperature n-decane-soluble portion (d2) is in the range of 15 to 35% by weight, preferably 20 to 30% by weight, and the content of the room temperature n-decane-insoluble portion (d1) is in the range of 65 to 85% by weight, particularly preferably 70 to 80% by weight. The components of the room temperature n-decane-soluble portion (d2) and the room temperature n-decane-insoluble portion (d1) are components obtained when the crystalline polypropylene block copolymer (A) is fractionated on the basis of solubility in n-decane at room temperature.

When the contents of the room temperature n-decane-soluble portion (d2) and the room temperature n-decane-insoluble portion (d1) in the crystalline propylene block copolymer (A) are in the above ranges, a composition having excellent mechanical properties such as rigidity and impact resistance can be obtained, and moreover, lowering of impact resistance due to residence in a large molding machine is small.

The room temperature n-decane solvent fractionation of the crystalline propylene block copolymer (A) is carried out in the following manner. To 500 ml of n-decane at 135°C, 5 g of a sample of the crystalline polypropylene block copolymer (A) is added, and they are sufficiently stirred to completely dissolve the soluble component (soluble polymer) in the solvent. Thereafter, the resulting solution is cooled to 23°C and allowed to stand for 24 hours. Then, the n-decane solution is subjected to centrifugal separation, and the liquid phase separated is decanted into 1000 ml of acetone to precipitate a polymer. The precipitate is filtered, washed and dried to obtain a room temperature n-decane-soluble portion (d2). The component other than the room temperature n-decane-soluble portion (d2) is regarded as a room temperature n-decane-insoluble portion (d1).

In the crystalline propylene block copolymer (A), the room temperature n-decane-insoluble portion (d1) preferably consists of only structural units derived from propylene, but it may contain structural units derived from other monomers in a small amount, for example, not more than 10% by mol, preferably not more than 5% by mol.

Examples of other monomers include α-olefins other than propylene, such as ethylene, 1-butene, 1-pentene, 1-hexene, 4-methyl-1-pentene, 3-methyl-1-pentene, 1-heptene, 1-octene, 1-nonene, 1-decene and 1-dodecene; vinyl compounds, such as styrene, vinylcyclopentene, vinylcyclohexane and vinylnorbornane; vinyl esters, such as vinyl acetate; unsaturated organic acids or their derivatives, such as maleic anhydride; conjugated dienes; and non-conjugated polyenes, such as dicyclopentadiene, 1,4-hexadiene, dicyclooctadiene, methylenenorbornene and 5-ethylidene-2-norbornene. Of these, ethylene and α-olefins of 4 to 10 carbon atoms are preferable. Two or more kinds of these monomers may be copolymerized.

MFR of the room temperature n-decane-insoluble portion (d1) of the crystalline propylene block copolymer (A) is in the range of 10 to 300 g/10min, preferably 20 to 200 g/10min.

When the MFR of the room temperature n-decane-insoluble portion (d1) of the crystalline propylene block copolymer (A) is in the above range, a composition having excellent flowability and impact resistance can be obtained.

Mz/Mw of the room temperature n-decane-insoluble portion (d1), as measured by a gel permeation chromatograph (GPC) method, is not less than 3.0, preferably not less than 3.1. Mw/Mn thereof, as measured by a GPC method, is in the range of preferably 6 to 20, particularly preferably 8 to 20.

That the room temperature n-decane-insoluble portion (d1) has Mw/Mn of 6 to 20 and Mz/Mw of not less than 3.0 indicates that the room temperature n-decane-insoluble portion (d1) of the crystalline propylene block copolymer (A) for use in the present invention has a wide distribution on the higher molecular weight side as compared with conventional polypropylene.

The room temperature n-decane-insoluble portion (d1) of the crystalline propylene block copolymer (A) preferably comprises (a-1) a high-molecular weight polypropylene portion having an intrinsic viscosity [η], as measured in decalin at 135°C, of 6 to 13 dl/g, preferably 7 to 12 dl/g, and (a-2) a low-molecular weight polypropylene portion having an intrinsic viscosity [η], as measured in decalin at 135°C, of less than 6 dl/g. It is desirable that the amount of the high-molecular weight polypropylene portion (a-1) is in the range of 0.5 to 10% by weight, preferably 1.0 to 5% by weight,

based on the whole room temperature n-decane-insoluble portion (d1), and the amount of the low-molecular weight polypropylene portion (a-2) is in the range of 99.5 to 90% by weight, preferably 99.0 to 95% by weight, based on the whole room temperature n-decane-insoluble portion (d1).

When the crystalline propylene block copolymer (A) satisfies the above requirements, a molded article having few flow marks can be obtained.

The isotactic pentad fraction (mmmm) of the room temperature n-decane-insoluble portion (d1) of the crystalline propylene block copolymer (A), as measured by $^{13}C$-NMR, is not less than 97%, preferably not less than 97.5%.

The isotactic pentad fraction (mmmm fraction) is an indication of stereoregularity of polypropylene, and a higher value indicates higher stereoregularity. Polypropylene having an isotactic pentad fraction (mmmm fraction) of not less than 97% means polypropylene of high stereoregularity.

The isotactic pentad fraction (mmmm fraction) is a fraction of propylene monomer units each of which is present at the center of a sequence wherein 5 propylene monomer units are continuously meso-bonded, said sequence being an isotactic sequence of pentad units in the polypropylene molecular chain, and this fraction is measured by the use of $^{13}C$-NMR. More specifically, the isotactic pentad fraction is a value obtained as a fraction of mmmm peaks in all the absorption peaks in the methyl carbon regions in the $^{13}C$-NMR spectrum.

Although the room temperature n-decane-soluble portion (d2) is mainly a propylene/α-olefin copolymer, it contains a part of the high-molecular weight polypropylene portion (a-1) and/or the low-molecular weight polypropylene portion (a-2) or a by-product produced in the preparation of those portions. Although the component (d1) that is soluble in n-decane at 135°C and insoluble in n-decane at 23°C is mainly a high-molecular weight polypropylene portion and a low-molecular weight polypropylene portion, it contains a part of the propylene/α-olefin copolymer or a by-product produced in the preparation of the copolymer.

The α-olefin of the propylene/α-olefin copolymer for forming the room temperature n-decane-soluble portion (d2) is, for example, ethylene and/or an α-olefin of 4 to 12 carbon atoms. More specifically, there can be mentioned α-olefins, such as ethylene, 1-butene, 1-pentene, 1-hexene, 4-methyl-1-pentene, 3-methyl-1-pentene, 1-heptene, 1-octene, 1-nonene, 1-decene and 1-dodecene. Of these, ethylene is preferable.

The room temperature n-decane-soluble portion (d2) has an ethylene content of 20 to 50% by mol, preferably 25 to 35% by mol, and has an intrinsic viscosity [η], as measured in decalin at 135°C, of 1 to 5 dl/g, particularly preferably 1.5 to 4.0 dl/g.

When the ethylene content and the intrinsic viscosity [η] of the room temperature n-decane-soluble portion (d2) are in the above ranges, lowering of impact resistance due to residence of the composition in a molten state in a large molding machine is small.

MFR of the crystalline propylene block copolymer (A) is in the range of 5 to 80 g/10min, preferably 10 to 70 g/10min, more preferably 20 to 60 g/10min.

When the MFR of the crystalline propylene block copolymer (A) is in the above range, a molded article having excellent moldability and mechanical properties can be obtained.

The crystalline propylene block copolymer (A) for use in the present invention may be a composition comprising the following specific crystalline propylene block copolymer (A-1) in an amount of 99.5 to 80% by weight, preferably 98 to 85% by weight, and the following specific propylene homopolymer (A-2) and/or the following specific propylene random copolymer (A-3) in an amount of 0.5 to 20% by weight, preferably 2 to 15% by weight.

When the crystalline propylene block copolymer (A) is a composition comprising the crystalline propylene block copolymer (A-1) and the propylene homopolymer (A-2) and/or the propylene random copolymer (A-3), it can be easily prepared.

The crystalline propylene block copolymer (A-1) comprises (d1) a room temperature n-decane-insoluble portion and (d2) a room temperature n-decane-soluble portion, and a content of the room temperature n-decane-soluble portion (d2) is 17 to 35% by weight, particularly preferably 20 to 33% by weight, and has a melt flow rate (ASTM D 1238, measured at 230°C under a load of 2160 g) of 10 to 100 g/10min, particularly preferably 20 to 90 g/10min.

When the crystalline propylene block copolymer (A-1) satisfies the above requirements, a composition having excellent moldability as well as rigidity and impact resistance can be obtained.

Each of the room temperature n-decane-insoluble portion (d1) of the propylene homopolymer (A-2) and the propylene random copolymer (A-3) comprises (a-1) high-molecular weight polypropylene having an intrinsic viscosity [η], as measured in decalin at 135°C, of 6 to 13 dl/g, preferably 8 to 11 dl/g, in an amount of 10 to 80% by weight, preferably 10 to 70% by weight, more preferably 10 to 35% by weight, particularly preferably 15 to 30% by weight, and (a-2) low-molecular weight polypropylene having an intrinsic viscosity [η], as measured in decalin at 135°C, of less than 6 dl/g, in an amount of 90 to 20% by weight, preferably 90 to 30% by weight, more preferably 90 to 65% by weight, particularly preferably 85 to 70% by weight.

When each of the propylene homopolymer (A-2) and the propylene random copolymer (A-3) satisfies the above requirements, a molded article having few flow marks can be obtained.

The propylene random copolymer (A-3) is a copolymer of propylene and an α-olefin other than propylene.

Examples of the α-olefins other than propylene include α-olefins, such as ethylene, 1-butene, 1-pentene, 1-hexene, 4-methyl-1-pentene, 3-methyl-1-pentene, 1-heptene, 1-octene, 1-nonene, 1-decene and 1-dodecene. Of these, ethylene is preferable. In the propylene random copolymer (A-3), the content of the constituent units derived from the α-olefin other than propylene is not more than 5%, preferably not more than 3%.

Process for preparing crystalline propylene block copolymer (A)

The crystalline propylene block copolymer (A) for use in the present invention can be prepared by, for example, multistage polymerization of three or more steps in the presence of a catalyst for the preparation of high stereoregular polypropylene.

That is to say, the crystalline propylene block copolymer (A) for use in the present invention can be prepared by multistage polymerization of three or more steps including a step of polymerizing propylene substantially in the absence of hydrogen and in the presence of a polymerization catalyst for the preparation of high stereoregular polypropylene, which comprises (i) a solid titanium catalyst component containing magnesium, titanium, halogen and an electron donor, (ii) an organometallic compound catalyst component and (iii) an electron donor component, to prepare a high-molecular weight polypropylene (a-1) having an intrinsic viscosity [η] of 6 to 13 dl/g in an amount of 0.3 to 8.5% by weight based on the whole crystalline propylene block copolymer (A) finally obtained, a step of polymerizing propylene in the presence of the above-mentioned polymerization catalyst to prepare a low-molecular weight polypropylene (a-2) having an intrinsic viscosity [η] of less than 6 dl/g in an amount of 56.5 to 84.7% by weight based on the whole propylene block copolymer (A) finally obtained, and a step of copolymerizing propylene and an α-olefin in the presence of the above-mentioned polymerization catalyst to prepare a propylene/α-olefin copolymer having an intrinsic viscosity [η] of less than 6 dl/g in an amount of 15 to 35% by weight based on the whole propylene block copolymer (A) finally obtained. Although the methods to control the molecular weight and the intrinsic viscosity [η] are not specifically restricted, it is preferable to use hydrogen as a molecular weight modifier.

The order of preparation is preferably as follows. In the first step, the high-molecular weight polypropylene (a-1) is prepared substantially in the absence of hydrogen; in the second step or thereafter, the low-molecular weight polypropylene (a-2) is prepared; and in the third step or thereafter, the propylene/α-olefin copolymer (ii) is prepared. The order of preparation can be changed. For example, it is possible that the low-molecular weight polypropylene (a-2) is prepared in the first step and the high-molecular weight polypropylene (a-1) is prepared in the second step or thereafter. In this case, however, the molecular weight modifier contained in the reaction product of the first step, such as hydrogen, needs to be removed as much as possible prior to the beginning of polymerization in the second step or thereafter. Therefore, the polymerization apparatus becomes complicated, and the intrinsic viscosity [η] does not rise easily in the second step or thereafter.

The crystalline propylene block copolymer (A) for use in the present invention can be prepared by another process. That is to say, in the first step of a first process, propylene is polymerized to prepare the low-molecular weight polypropylene (a-2) having an intrinsic viscosity [η] of less than 6 dl/g, and in the second step, propylene and an α-olefin are copolymerized to prepare the propylene/α-olefin copolymer having an intrinsic viscosity [η] of less than 6 dl/g, whereby the propylene block copolymer (A-1) is prepared; in the first step of a second process that is different from the first process, propylene is polymerized substantially in the absence of hydrogen and in the presence of the polymerization catalyst for the preparation of high stereoregular polypropylene to prepare the high-molecular weight polypropylene having an intrinsic viscosity [η] of 6 to 13 dl/g, and in the second step, propylene is polymerized in the presence of hydrogen and in the presence of the above catalyst to prepare the low-molecular weight polypropylene having an intrinsic viscosity [η] of less than 6 dl/g, whereby the propylene homopolymer (A-2) is prepared; and in a third process, the propylene block copolymer (A-1) and the propylene homopolymer (A-2) are melt blended to prepare the crystalline propylene block copolymer (A). The above process is preferable because the copolymer (A) can be prepared simply and easily. The polymerization in each step can be carried out continuously, batchwise or semi-continuously, but it is preferable to carry out the polymerization continuously. Further, the polymerization can be carried out by a publicly known process, for example, a gas phase polymerization process or a liquid phase polymerization process such as solution polymerization, slurry polymerization or bulk polymerization. In the second step or thereafter, the polymerization is preferably carried out continuously similarly to the previous step. When the polymerization is carried out batchwise, multistage polymerization can be carried out by the use of one polymerization reactor.

Catalyst

As the polymerization catalyst used for preparing the polypropylene block copolymer (A) for use in the present invention, a catalyst for the preparation of high stereoregular polypropylene, which comprises (i) a solid titanium catalyst component containing magnesium, titanium, halogen and an electron donor, (ii) an organometallic compound catalyst component and (iii) an electron donor component, is preferably employed.

(i) Solid titanium catalyst component

The solid titanium catalyst component (i) can be prepared by contacting a magnesium compound (i-1), a titanium compound (i-2) and an electron donor (i-3) with each other.

As the magnesium compound (i-1), a magnesium compound having reducing ability, such as a magnesium compound having a magnesium-carbon bond or a magnesium-hydrogen bond, or a magnesium compound having no reducing ability, such as magnesium halide, alkoxymagnesium halide, allyloxymagnesium halide, alkoxymagnesium, allyloxymagnesium or carboxylic acid salt of magnesium, is employable.

In the preparation of the solid titanium catalyst component (i), a tetravalent titanium compound represented by, for example, the following formula (1) is preferably employed as the titanium compound (i-2).

$$Ti(OR)_gX_{4-g} \qquad (1)$$

wherein R is a hydrocarbon group, X is a halogen atom, and $0 \le g \le 4$.

Examples of such titanium compounds include titanium tetrahalides, such as $TiCl_4$, $TiBr_4$ and $TiI_4$; alkoxytitanium trihalides, such as $Ti(OCH_3)Cl_3$, $Ti(OC_2H_5)Cl_3$, $Ti(O\text{-}n\text{-}C_4H_9)Cl_3$, $Ti(OC_2H_5)Br_3$ and $Ti\ (O\text{-}iso\text{-}C_4H_9)Br_3$; dialkoxytitanium dihalides, such as $Ti(OCH_3)_2Cl_2$, $Ti(OC_2H_5)_2Cl_2$, $Ti(O\text{-}n\text{-}C_4H_9)_2H_2$ and $Ti(OC_2H_5)_2Br_2$; trialkoxytitanium monohalides, such as $Ti(OCH_3)_3Cl$, $Ti(OC_2H_5)_3Cl$, $Ti(O\text{-}n\text{-}C_4H_9)_3Cl$ and $Ti(OC_2H_5)_3Br$; and tetraalkoxytitanium, such as $Ti(OCH_3)_4$, $Ti(OC_2H_5)_4$, $Ti(O\text{-}n\text{-}C_4H_9)_4$, $Ti(O\text{-}iso\text{-}C_4H_9)_4$ and $Ti(O\text{-}2\text{-}ethylhexyl)_4$.

Examples of the electron donors (i-3) used in the preparation of the solid titanium catalyst component (i) include alcohols, phenols, ketones, aldehydes, carboxylic acids, organic acid halides, esters of organic acids or inorganic acids, ethers, acid amides, acid anhydrides, ammonia, amines, nitriles, isocyanates, nitrogen-containing cyclic compounds and oxygen-containing cyclic compounds.

More specifically, there can be mentioned alcohols of 1 to 18 carbon atoms, such as methanol, ethanol, propanol, butanol, pentanol, hexanol, 2-ethylhexanol, octanol, dodecanol, octadecyl alcohol, oleyl alcohol, benzyl alcohol, phenylethyl alcohol, cumyl alcohol, isopropyl alcohol and isopropylbenzyl alcohol; halogen-containing alcohols of 1 to 18 carbon atoms, such as trichloromethanol, trichloroethanol and trichlorohexanol; phenols of 6 to 20 carbon atoms which may have a lower alkyl group, such as phenol, cresol, xylenol, ethylphenol, propylphenol, nonylphenol, cumylphenol and naphthol; ketones of 3 to 15 carbon atoms, such as acetone, methyl ethyl ketone, methyl isobutyl ketone, acetophenone, benzophenone and benzoquinone; aldehydes of 2 to 15 carbon atoms, such as acetaldehyde, propionaldehyde, octylaldehyde, benzaldehyde, tolualdehyde and naphthaldehyde; organic acid esters of 2 to 30 carbon atoms, such as methyl formate, methyl acetate, ethyl acetate, vinyl acetate, propyl acetate, octyl acetate, cyclohexyl acetate, ethyl propionate, methyl butyrate, ethyl valerate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluate, ethyl toluate, amyl toluate, ethyl ethylbenzoate, methyl anisate, ethyl anisate, ethoxy ethylbenzoate, $\gamma$-butyrolatone, $\delta$-valerolactone, coumarin, phthalide and ethyl carbonate; acid halides of 2 to 15 carbon atoms, such as acetyl chloride, benzoyl chloride, toluic acid chloride and anisic acid chloride; and ethers, such as methyl ether, ethyl ether, isopropyl ether, butyl ether and amyl ether.

The solid titanium catalyst component (i) can be prepared by various processes including publicly known ones. Some examples of the processes are briefly described below.

(1) A process wherein a hydrocarbon solution of a magnesium compound (i-1), said solution containing an electron donor (liquefying agent) (i-3), is contacted with an organometallic compound to precipitate a solid, and after the precipitation or with precipitating, the solution is contacted with a titanium compound (i-2).

(2) A process wherein a complex of a magnesium compound (i-1) and an electron donor (i-3) is contacted with an organometallic compound and then contacted with a titanium compound (i-2).

(3) A process wherein a contact product of an inorganic carrier with an organomagnesium compound (i-1) is contacted with a titanium compound (i-2) and an electron donor (i-3). In this process, the contact product may be previously contacted with a halogen-containing compound and/or an organometallic compound.

(4) A process wherein from a mixture of a solution of a magnesium compound (i-1), said solution containing a liquefying agent and occasionally a hydrocarbon solvent, an electron donor (i-3) and a carrier, a magnesium compound (i-1)-supported carrier is obtained, and then the carrier is contacted with a titanium compound (i-2).

(5) A process wherein a solution containing a magnesium compound (i-1), a titanium compound (i-2), an electron donor (i-3) and occasionally a hydrocarbon solvent is contacted with a carrier.

(6) A process wherein a liquid organomagnesium compound (i-1) is contacted with a halogen-containing titanium compound (i-2). In this process, an electron donor (i-3) is used at least once.

(7) A process wherein a liquid organomagnesium compound (i-1) is contacted with a halogen-containing compound and then contacted with a titanium compound (i-2). In this process, an electron donor (i-3) is used at least once.

(8) A process wherein an alkoxy group-containing magnesium compound (i-1) is contacted with a halogen-containing titanium compound (i-2). In this process, an electron donor (i-3) is used at least once.

(9) A process wherein a complex of an alkoxy group-containing magnesium compound (i-1) and an electron donor (i-3) is contacted with a titanium compound (i-2).

(10) A process wherein a complex of an alkoxy group-containing magnesium compound (i-1) and an electron donor (i-3) is contacted with an organometallic compound and then contacted with a titanium compound (i-2).

(11) A process wherein a magnesium compound (i-1), an electron donor (i-3) and a titanium compound (i-3) are contacted in an arbitrary order. Prior to this reaction, each component may be subjected to pretreatment with a reaction assistant, such as an electron donor (i-3), an organometallic compound or a halogen-containing silicon compound.

(12) A process wherein a liquid magnesium compound (i-1) having no reducing ability is contacted with a liquid titanium compound (i-2) in the presence of an electron donor (i-3) to precipitate a solid magnesium-titanium complex.

(13) A process wherein the reaction product obtained in the process (12) is further reacted with a titanium compound (i-2).

(14) A process wherein the reaction product obtained in the process (11) or (12) is further reacted with an electron donor (i-3) and a titanium compound (i-2).

(15) A process wherein a solid substance obtained by pulverizing a magnesium compound (i-1), a titanium compound (i-2) and an electron donor (i-3) is treated with any one of halogen, a halogen compound and aromatic hydrocarbon. This process may include a step of pulverizing a magnesium compound (i-1) only, or a complex compound of a magnesium compound (i-1) and an electron donor (i-3), or a magnesium compound (i-1) and a titanium compound (i-2). After the pulverization, the solid substance may be pretreated with a reaction assistant and then treated with halogen or the like. As the reaction assistant, an organometallic compound, a halogen-containing silicon compound or the like is employed.

(16) A process wherein a magnesium compound (i-1) is pulverized and then contacted with a titanium compound (i-2). In the pulverization and/or the contact of the magnesium compound (i-1), an electron donor (i-3) is employed together with a reaction assistant, when needed.

(17) A process wherein the compound obtained in any one of the processes (11) to (16) is treated with halogen, a halogen compound or aromatic hydrocarbon.

(18) A process wherein a contact product of a metal oxide, organomagnesium (i-1) and a halogen-containing compound is contacted with an electron donor (i-3) and preferably with a titanium compound (i-2).

(19) A process wherein a magnesium compound (i-1), such as a magnesium salt of an organic acid, alkoxymagnesium or aryloxymagnesium, is contacted with a titanium compound (i-2), an electron donor (i-3), and if necessary, halogen-containing hydrocarbon.

(20) A process wherein a hydrocarbon solution containing a magnesium compound (i-1) and alkoxytitanium is contacted with an electron donor (i-3) and if necessary a titanium compound (i-2). In this process, a halogen-containing compound such as a halogen-containing silicon compound is preferably allowed to be present.

(21) A process wherein a liquid magnesium compound (i-1) having no reducing ability is reacted with an organometallic compound to precipitate a solid magnesium-metal (aluminum) complex, and then the complex is reacted with an electron donor (i-3) and a titanium compound (i-2) .

(ii) Organometallic compound catalyst component

The organometallic compound catalyst component (ii) is preferably a compound containing a metal selected from Group 1 to Group 3 of the periodic table. Examples of such compounds include an organoaluminum compound, a complex alkyl compound of Group 1 metal and aluminum, and an organometallic compound of Group 2 metal, which are described below.

(ii-1) An organoaluminum compound represented by the formula:

$$R^{31}{}_{m}Al(OR^{32})_{n}H_{p}X_{q}$$

wherein $R^{31}$ and $R^{32}$ are each a hydrocarbon group containing usually 1 to 15 carbon atoms, preferably 1 to 4 carbon atoms, and may be the same or different, X is a halogen atom, and m, n, p and q are numbers satisfying the conditions of $0<m\leq3$, $0\leq n<3$, $0\leq p<3$, $0\leq q<3$ and $m+n+p+q=3$.

(ii-2) A complex alkyl compound of Group 1 metal and aluminum, which is represented by the formula:

$$M^{1}AlR^{31}{}_{4}$$

wherein $M^1$ is Li, Na or K, and $R^{31}$ is the same as above.
(ii-3) A dialkyl compound of Group 2 metal or Group 3 metal, which is represented by the formula:

$$R^{31}R^{32}M^2$$

wherein $R^{31}$ and $R^{32}$ are the same as above, and $M^2$ is Mg, Zn or Cd.

Examples of the organoaluminum compounds (ii-1) include:

a compound represented by the formula:

$$R^{31}{}_mAl(OR^{32})_{3-m}$$

wherein $R^{31}$ and $R^{32}$ are the same as above, and m is a number of $1.5 \leq m \leq 3$;
a compound represented by the formula:

$$R^{31}{}_mAlX_{3-m}$$

wherein $R^{31}$ is the same as above, X is halogen, and m is preferably a number of $0<m<3$;
a compound represented by the formula:

$$R^{31}{}_mAlH_{3-m}$$

wherein $R^{31}$ is the same as above, and m is preferably a number of $2 \leq m \leq 3$; and
a compound represented by the formula:

$$R^{31}{}_mAl(OR^{32})_nX_q$$

wherein $R^{31}$ and $R^{32}$ are the same as above, X is halogen, and m, n and q are numbers satisfying the conditions of $0<m \leq 3$, $0 \leq n<3$, $0 \leq q<3$ and $m+n+q=3$.

<u>(iii) Electron donor component</u>

The electron donor component (iii) is a compound that is publicly known as an electron donor for preparing high stereoregular polyolefin, and is, for example, (iii-1) a compound having two or more ether bonds through plural atoms or (iii-2) an organosilane compound.

In the compound (iii-1) having two or more ether bonds through plural atoms (sometimes referred to as a polyether compound" hereinafter), one or more kinds of atoms selected from the group consisting of carbon, silicon, oxygen, sulfur, phosphorus and boron are present between the ether bonds, and the number of atoms is 2 or more. Desirable is a compound wherein a relatively bulky substituent, specifically a substituent having 2 or more carbon atoms, preferably 3 or more carbon atoms, and having a straight-chain, branched or cyclic structure, preferably a branched or cyclic structure, is bonded to the atoms present between the ether bonds.

Also preferable is a compound wherein the atoms present between two or more ether bonds include plural carbon atoms, preferably 3 to 20 carbon atoms, more preferably 3 to 10 carbon atoms, particularly preferably 3 to 7 carbon atoms. Such a polyether compound is, for example, a compound represented by the following formula:

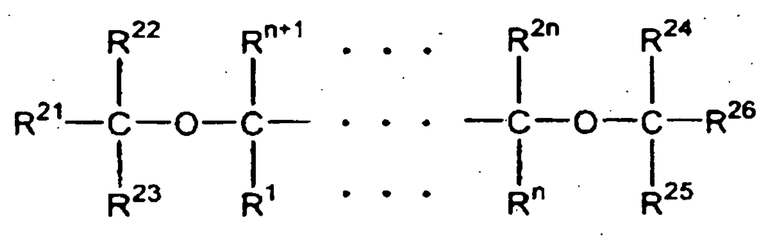

wherein n is an integer of $2 \leq n \leq 10$, $R^1$ to $R^{26}$ are each a substituent having at least one element selected from carbon, hydrogen, oxygen, halogen, nitrogen, sulfur, phosphorus, boron and silicon, arbitrary substituents of $R^1$ to $R^{26}$, preferably $R^1$ to $R^{2n}$, may form a ring other than a benzene ring in cooperation, and an atom other than carbon may be contained in the main chain.

Examples of such polyether compounds include 2-(2-ethylhexyl)-1,3-dimethoxypropane, 2-isopropyl-1,3-dimethoxypropane, 2-butyl-1,3-dimethoxypropane, 2-s-butyl-1,3-dimethoxypropane, 2-cyclohexyl-1,3-dimethoxypropane, 2-phenyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(2-fluorophenyl)-1,3-dimethoxypropane, 2-(1-decahydronaphthyl)-1,3-dimethoxypropane, 2-(p-t-butylphenyl)-1,3 dimethoxypropane, 2,2-dicyclohexyl-1,3-dimethoxypropane, 2,2-dicyclopentyl-1, 3-dimethoxypropane, 2,2-diethyl-1,3-dimethoxypropane, 2,2-dipropyl-1,3-dimethoxypropane, 2,2-diisopropyl-1,3-dimethoxypropane, 2,2-dibutyl-1,3-dimethoxypropane, 2-methyl-2-propyl-1,3-dimethoxypropane, 2-methyl-2-benzyl-1,3-dimethoxypropane, 2-methyl-2-ethyl-1,3-dimethoxypropane, 2-methyl-2-isopropyl-1,3 dimethoxypropane, 2-methyl-2-phenyl-1,3-dimethoxypropane, 2-methyl-2-cyclohexyl-1,3-dimethoxypropane, 2,2-bis(p-chlorophenyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-diisobutyl-1,3-dimethoxypropane, 2,2-diphenyl-1,3-dimethoxypropane, 2,2-dibenzyl-1,3 -dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimethoxypropane, 2-(1-methylbutyl)-2-isopropyl-1,3-dimethoxypropane, 2-(1-methylbutyl)-2-s-butyl-1,3-dimethoxypropane, 2,2-di-s-butyl-1,3-dimethoxypropane, 2,2-di-t-butyl-1,3-dimethoxypropane, 2,2-dineopentyl-1,3-dimethoxypropane, 2-isopropyl-2-isopentyl-1,3-dimethoxypropane, 2-phenyl-2-isopropyl-1,3-dimethoxypropane, 2-phenyl-2-s-butyl-1,3-dimethoxypropane, 2-benzyl-2-isopropyl-1,3-dimethoxypropane, 2-benzyl-2-s-butyl-1,3-dimethoxypropane, 2-phenyl-2-benzyl-1,3-dimethoxypropane, 2-cyclopentyl-2-isopropyl-1,3-dimethoxypropane, 2-cyclopentyl-2-s-butyl-1,3-dimethoxypropane, 2-cyclohexyl-2-isopropyl-1,3-dimethoxypropane, 2-cyclohexyl-2-s-butyl-1,3-dimethoxypropane, 2-isopropyl-2-s-butyl-1,3-dimethoxypropane, 2-cyclohexyl-2-cyclohexylmethyl-1,3-dimethoxypropane, 2,3-diphenyl-1,4-diethoxybutane, 2,3-dicyclohexyl-1,4-diethoxybutane, 2,2-dibenzyl-1,4-diethoxybutane, 2,3-dicyclohexyl-1,4-diethoxybutane, 2,3-diisopropyl-1,4-diethoxybutane, 2,2-bis(p-methylphenyl)-1,4-dimethoxybutane, 2,3-bis(p-chlorophenyl)-1,4-dimethoxybutane, 2,3-bis(p-fluorophenyl)-1,4-dimethoxybutane, 2,4-diphenyl-1,5-dimethoxypentane, 2,5-diphenyl-1,5-dimethoxyhexane, 2,4-diisopropyl-1,5-dimethoxypentane, 2,4-diisobutyl-1,5-dimethoxypentane, 2,4-diisoamyl-1,5-dimethoxypentane, 3-methoxymethyltetrahydrofuran, 3-methoxymethyldioxane, 1,3-diisobutoxypropane, 1,2-diisobutoxypropane, 1,2-diisobutoxyethane, 1,3-diisoamyloxypropane, 1,3-diisoneopentyloxyethane, 1,3-dineopentyloxypropane, 2,2-tetramethylene-1,3-dimethoxypropane, 2,2-pentamethylene-1,3-dimethoxypropane, 2,2-hexamethylene-1,3-dimethoxypropane, 1,2-bis(methoxymethyl)cyclohexane, 2,8-dioxaspiro[5,5]undecane, 3,7-dioxabicyclo[3,3,1]nonane, 3,7-dioxabicyclo[3,3,0]octane, 3,3-diisobutyl-1,5-oxononane, 6,6-diisobutyldioxyheptane, 1,1-dimethoxymethylcyclopentane, 1,1-bis(dimethoxymethyl)cyclohexane, 1,1-bis(methoxymethyl)bicyclo[2,2,1]heptane, 2-methyl-2-methoxymethyl-1,3-dimethoxypropane, 2-cyclohexyl-2-ethoxymethyl-1,3-diethoxypropane, 2-cyclohexyl-2-methoxymethyl-1,3-dimethoxypropane, 2,2-diisobutyl-1,3-dimethoxycyclohexane, 2-isopropyl-2-isoamyl-1,3-dimethoxycyclohexane, 2-cyclohexyl-2-methoxymethyl-1,3-dimethoxycyclohexane, 2-isopropyl-2-methoxymethyl-1,3-dimethoxycyclohexane, 2-isobutyl-2-methoxymethyl-1,3-dimethoxycyclohexane, 2-cyclohexyl-2-ethoxymethyl-1,3-diethoxycyclohexane, 2-cyclohexyl-2-ethoxymethyl-1,3-dimethoxycyclohexane, 2-isopropyl-2-ethoxymethyl-1,3-diethoxycyclohexane, 2-isopropyl-2-ethoxymethyl-1,3-dimethoxycyclohexane, 2-isobutyl-2-ethoxymethyl-1,3-diethoxycyclohexane, 2-isobutyl-2-ethoxymethyl-1,3-dimethoxycyclohexane, tris(p-methoxyphenyl)phosphine, methylphenylbis(methoxymethyl)silane, diphenylbis(methoxymethyl)silane, methylcyclohexylbis(methoxymethyl)silane, di-t-butylbis(methoxymethyl)silane, cyclohexyl-t-butylbis-(methoxymethyl)silane and i-propyl-t-butylbis(methoxymethyl)silane. Of these, 1,3-diethers are preferably employed, and 2,2-isobutyl-1,3-dimethoxypropane, 2-isopropyl-2-isopentyl-1,3-dimethoxypropane, 2,2-dicyclohexyl-1,3-dimethoxypropane, 2,2-bis(cyclohexylmethyl)-1,3-dimethoxypropane, 2-cyclohexyl-2-isopropyl-1,3-dimethoxypropane, 2-isopropyl-2-s-butyl-1,3-dimethoxypropane, 2,2-diphenyl-1,3-dimethoxypropane and 2-cyclopentyl-2-isopropyl-1,3-dimethoxypropane are particularly preferably employed.

The organosilicon compound (iii-2) is, for example, a compound represented by the following formula (2):

$$SiR^{41}R^{42}_{n}(OR^{43})_{3-n} \qquad (2)$$

wherein n is 0, 1 or 2, $R^{41}$ is a group selected from the group consisting of a cyclopentyl group, a cyclopentenyl group, a cyclopentadienyl group and their derivatives, and $R^{42}$ and $R^{43}$ are each a hydrocarbon group.

Examples of the groups indicated by $R^{41}$ in the formula (2) include cyclopentyl groups or their derivatives, such as cyclopentyl, 2-methylcyclopentyl, 3-methylcyclopentyl, 2-ethylcyclopentyl, 3-propylcyclopentyl, 3-isopropylcyclopentyl, 3-butylcyclopentyl, 3-tert-butylcyclopentyl, 2,2-dimethylcyclopentyl, 2,3-dimethylcyclopentyl, 2,5-dimethylcyclopentyl, 2,2,5-trimethylcyclopentyl, 2,3,4,5-tetramethylcyclopentyl, 2,2,5,5-tetramethylcyclopentyl, 1-cyclopentylpropyl

and 1-methyl-l-cyclopentylethyl; cyclopentenyl groups or their derivatives, such as cyclopentenyl, 2-cyclopentenyl, 3-cyclopentenyl, 2-methyl-1-cyclopentenyl, 2-methyl-3-cyclopentenyl, 3-methyl-3-cyclopentenyl, 2-ethyl-3-cyclopentenyl, 2,2-dimethyl-3-cyclopentenyl, 2,5-dimethyl-3-cyclopentenyl, 2,3,4,5-tetramethyl-3-cyclopentenyl and 2,2,5,5-teramethyl-3-cyclopentenyl; cyclopentadienyl groups or their derivatives, such as 1,3-cyclopentadienyl, 2,4-cyclopentadienyl, 1,4-cyclopentadienyl, 2-methyl-1,3-cyclopentadienyl, 2-methyl-2,4-cyclopentadienyl, 3-methyl-2,4-cyclopentadienyl, 2-ethyl-2,4-cyclopentadienyl, 2,2-dimethyl-2,4-cyclopentadienyl, 2,3-dimethyl-2,4-cyclopentadienyl, 2,5-dimethyl-2,4-cyclopentadienyl and 2,3,4,5-tetramethyl-2,4-cyclopentadienyl; and derivatives of cyclopentyl groups, cyclopentenyl groups or cyclopentadienyl groups, such as indenyl, 2-methylindenyl, 2-ethylindenyl, 2-indenyl, 1-methyl-2-indenyl, 1,3-dimethyl-2-indenyl, indanyl, 2-methylindanyl, 2-indanyl, 1,3-dimethyl-2-indanyl, 4,5,6,7-tetrahydroindenyl, 4,5,6,7-tetrahydro-2-indenyl, 4,5,6,7-tetrahydro-1 methyl-2-indenyl, 4,5,6,7-tetrahydro-1,3-dimethyl-2-indenyl and fluorenyl.

Examples of the hydrocarbon groups indicated by $R^{42}$ and $R^{43}$ in the formula (2) include an alkyl group, a cycloalkyl group, an aryl group and an aralkyl group. When two or more of $R^{42}$ or $R^{43}$ are present, two or more of $R^{42}$ or two or more of $R^{43}$ may be the same or different, and $R^{42}$ and $R^{43}$ may be the same or different. In the formula (2), $R^{41}$ and $R^{42}$ may be crosslinked through an alkylene group or the like.

Of the organosilicon compounds represented by the formula (2), preferable is an organosilicon compound wherein $R^{41}$ is a cycloperityl group, $R^{42}$ is an alkyl group or a cyclopentyl group, and $R^{43}$ is an alkyl group, particularly methyl or ethyl.

Examples of the organosilicon compounds represented by the formula (2) include trialkoxysilanes, such as cyclopentyltrimethoxysilane, 2-methylcyclopentyltrimethoxysilane, 2,3-dimethylcyclopentyltrimethoxysilane, 2,5-dimethylcyclopentyltrimethoxysilane, cyclopentyltriethoxysilane, cyclopentenyltrimethoxysilane, 3-cyclopentenyltrimethoxysilane, 2,4-cyclopentadienyltrimethoxysilane, indenyltrimethoxysilane and fluorenyltrimethoxysilane; dialkoxysilanes, such as dicylopentyldimethoxysilane, bis(2-methylcyclopentyl)dimethoxysilane, bis(3-tert-butylcyclopentyl) dimethoxysilane, bis(2,3-dimethylcyclopentyl)dimethoxysilane, bis(2,5-dimethylcyclopentyl)dimethoxysilane, dicyclopentyldiethoxysilane, dicyclopentenyldimethoxysilane, di(3-cyclopentenyl)dimethoxysilane, bis(2,5-dimethyl-3-cyclopentenyl)dimethoxysilane, di-2,4-cyclopentadienyldimethoxysilane, bis(2,5-dimethyl-2,4-cyclopentadienyl)dimethoxysilane, bis(1-methyl-1-cyclopentylethyl)dimethoxysilane, cyclopentylcyclopentenyldimethoxysilane, cyclopentylcyclopentadienyldimethoxysilane, diindenyldimethoxysilane, bis(1,3-dimethyl-2-indenyl)dimethoxysilane, cyclopentadi-enylindenyldimethoxysilane, difluorenyldimethoxysilane, cyclopentylfluorenyldimethoxysilane and indenylfluorenyld-imethoxysilane; monoalkoxysilanes, such as tricyclopentylmethoxysilane, tricyclopentenylmethoxysilane, tricyclopenta-dienylmethoxysilane, tricyclopentylethoxysilane, dicyclopentylmethylmethoxysilane, dicylopentylethylmethoxysilane, di-cylopentylmethylethoxysilane, cyclopentyldimethylmethoxysilane, cyclopentyldiethylmethoxysilane, cyclopentyldimeth-ylethoxysilane, bis(2,5-dimethylcyclopentyl)cyclopentylmethoxysilane, dicyclopentylcyclopentenylmethoxysilane, dicyclopentylcyclopentadienylmethoxysilane and diindenylcyclopentylmethoxysilane; and other compounds, such as ethylenebiscyclopentyldimethoxysilane.

Another embodiment of the organosilicon compound (iii-2) in the present invention is an organosilicon compound represented by the following formula (3) or (4).

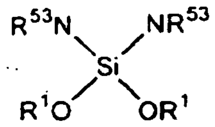

... (3)

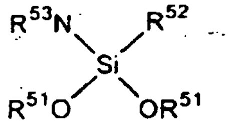

... (4)

In the formula (3) or (4), $R^{51}$ is a hydrocarbon group of 1 to 8 carbon atoms.

Examples of the hydrocarbon groups of 1 to 8 carbon atoms include saturated aliphatic hydrocarbon groups of 1 to 8 carbon atoms, such as methyl, ethyl, n-propyl, isopropyl, n-butyl, isobutyl, tert-butyl, sec-butyl, n-pentyl, isopentyl, cyclopentyl, n-hexyl and cyclohexyl, and unsaturated hydrocarbon groups of 2 to 8 carbon atoms. Of these, methyl is particularly preferable.

$R^{52}$ is a hydrocarbon group of 2 to 24 carbon atoms, preferably 2 to 8 carbon atoms, a hydrocarbon amino

group of 2 to 24 carbon atoms, preferably 2 to 8 carbon atoms, or a hydrocarbon alkoxy group of 1 to 24 carbon atoms, preferably 1 to 8 carbon atoms. Of these, a hydrocarbon group of 2 to 24 carbon atoms or a hydrocarbon amino group of 2 to 24 carbon atoms is preferable.

Examples of the hydrocarbon groups of 2 to 24 carbon atoms include ethyl, n-propyl, isopropyl, n-butyl, isobutyl, sec-butyl, tert-butyl, n-pentyl, isopentyl, n-hexyl, n-heptyl, n-octyl, cyclopentyl, cyclohexyl, thexyl, phenyl, benzyl and toluyl. Hydrocarbon groups containing a silicon atom, such as trimethylsilylmethyl and bistrimethylsilylmethyl, are also employable.

Examples of the hydrocarbon amino groups of 2 to 24 carbon atoms include dimethylamino, methylethylamino, diethylamino, ethyl-n-propylamino, di-n-propylamino, ethylisopropylamino, diisopropylamino, pyrrolidino, piperidino and hexamethyleneimino.

Examples of the hydrocarbon alkoxy groups of 1 to 24 carbon atoms include methoxy, isopropoxy and tert-butoxy.

Of the above groups, propyl such as n-propyl or isopropyl, butyl such as isobutyl or tert-butyl, cyclopentyl, diethylamino, tert-butoxy or the like is preferably employed.

$R^{53}N$ is a polycyclic amino group of 7 to 40 carbon atoms, which forms skeleton together with a nitrogen atom. The polycyclic amino group may be a saturated polycyclic amino group or a polycyclic amino compound wherein a part or the whole of the ring is unsaturated. The nitrogen atom of the polycyclic amino group is directly bonded to a silicon atom of the organosilicon compound (Si-N bond). That is to say, a hydrogen atom of $R^{53}NH$ that is secondary amine is removed, and Si and N are chemically bonded. In the formula (3), the two $R^{53}N$ groups may be the same or different.

Examples of $R^{53}NH$ include amine compounds, such as perhydroindole, perhydroisoindole, perhydroquinoline, perhydroisoquinoline, perhydrocarbazole, perhydroacridine, perhydrophenanthridine, perhydrobenzo(g)quinoline, perhydrobenzo(h)quinoline, perhydrobenzo(f)quinoline, perhydrobenzo(g)isoquinoline, perhydrobenzo(h)isoquinoline, perhydrobenzo(f)isoquinoline, perhydroacequinoline, perhydroaceisoquinoline and perhydroiminostilbene, which are represented by the following chemical structural formulas, and amine compounds wherein a part of hydrogen atoms other than nitrogen atom in these amine compounds are substituted with alkyl groups, phenyl groups or cycloalkyl groups.

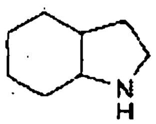
perhydroindole

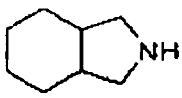
perhydroisoindole

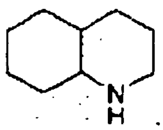
perhydroquinoline

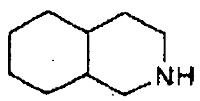
perhydroisoquinoline

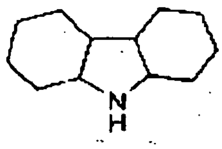
perhydrocarbazole

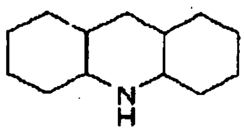
perhydroacridine

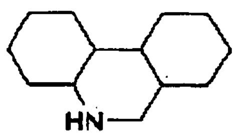
perhydrophenanthridine

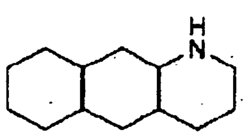
perhydrobenzo(g)quinoline

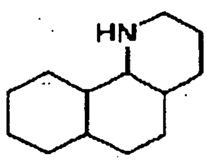
perhydrobenzo(h)quinoline

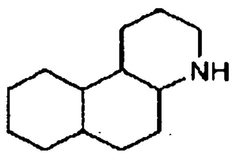
perhydrobenzo(f)quinoline

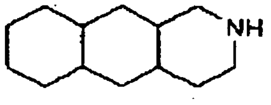

perhydrobenzo(g)isoquinoline

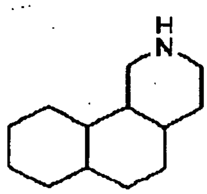

perhydrobenzo(h)isoquinoline

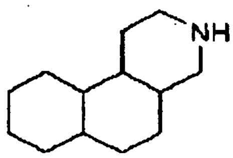

perhydrobenzo(f)isoquinoline

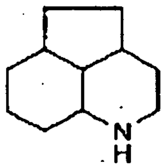

perhydroacequinoline

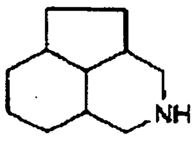

perhydroaceisoquinoline

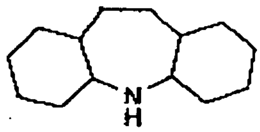

perhydroiminostilbene

Also available as $R^{53}NH$ are polycyclic amino groups wherein a part of the ring is unsaturated, such as 1,2,3,4-tetrahydroquinoline and 1,2,3,4-tetrahydroisoquinoline, which are represented by the following chemical structural formulas, and amine compounds wherein a part of hydrogen atoms other than nitrogen atom are substituted with alkyl groups, phenyl groups or cycloalkyl groups.

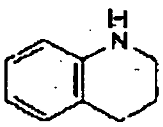

1,2,3,4-tetrahydroquinoline

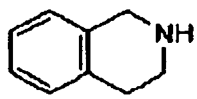

1,2,3,4-tetrahydroisoquinoline

Particularly preferable as $R^{53}NH$ are perhydroquinoline, perhydroisoquinoline, 1,2,3,4-tetrahydroquinoline, 1,2,3,4-tetrahydroisoquinoline and their derivatives.

Examples of the organosilicon compounds represented by the formula (3) include a bisperhydroquinolino compound, a bisperhydroisoquinolino compound, a (perhydroquinolino)(perhydroisoquinolino) compound, a bis(1,2,3,4-tetrahydroquinolino) compound, a bis(1,2,3,4-tetrahydroisoquinolino) compound and a (1,2,3,4-tetrahydroquinolino)(1,2,3,4-tetrahydroisoquinolino) compound, which are represented by the following formulas.

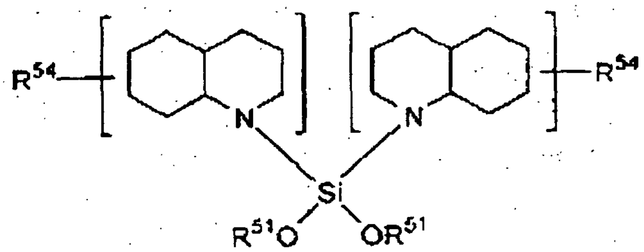

bisperhydroquinolino compound

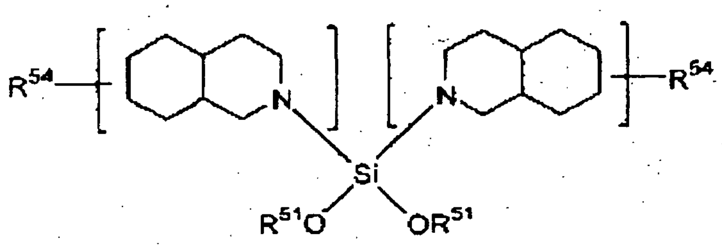

bisperhydroisoquinolino compound

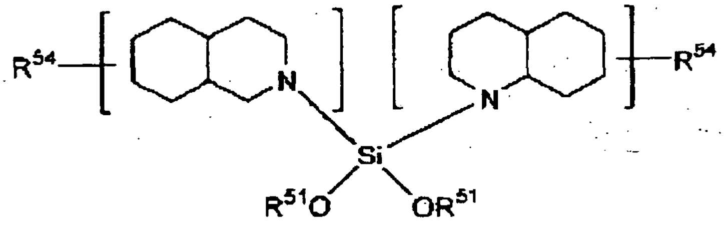

(perhydroquinolino)(perhydroisoquinolino) compound

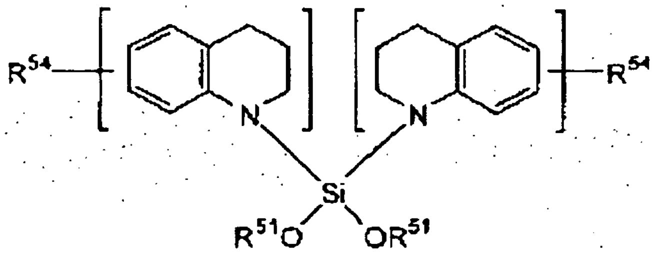

bis(1,2,3,4-tetrahydroquinolino) compound

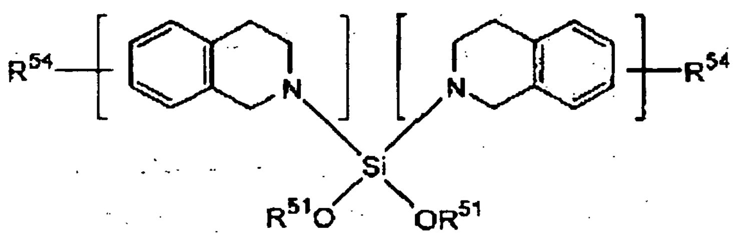

bis(1,2,3,4-tetrahydroisoquinolino) compound

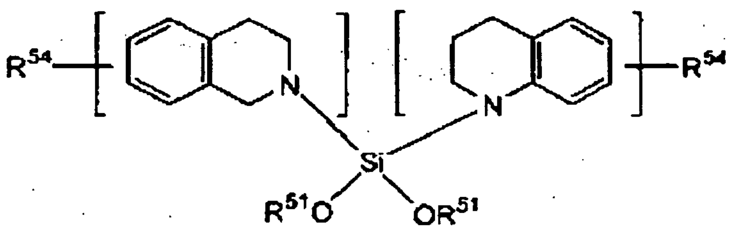

(1,2,3,4-tetrahydroquinolino)(1,2,3,4-tetrahydro isoquinolino) compound

$R^{54}$ is a substituent on the saturated ring of $R^{53}N$ and is hydrogen or an unsaturated or saturated aliphatic hydrocarbon group of 1 to 24 carbon atoms. $R^{54}$ is preferably hydrogen, methyl, ethyl, n-propyl, isopropyl, n-butyl, isobutyl, tert-butyl, sec-butyl or the like. The number of hydrocarbon substituents on the saturated ring of $R^{53}N$ may be 1 or more.

Examples of the bisperhydroquinolino compounds include:

bis(perhydroquinolino)dimethoxysilane;

bis(methyl-substituted perhydroquinolino)dimethoxysilanes, such as bis(2-methylperhydroquinolino)dimethoxysilane, bis(3-methylperhydroquinolino)dimethoxysilane, bis(4-methylperhydroquinolino)dimethoxysilane, bis(5-methylperhydroquinolino)dimethoxysilane, bis(6-methylperhydroquinolino)dimethoxysilane, bis(7-methylperhydroquinolino)dimethoxysilane, bis(8-methylperhydroquinolino)dimethoxysilane, bis(9-methylperhydroquinolino)dimethoxysilane and bis(10-methylperhydroquinolino)dimethoxysilane;

bis(dimethyl-substituted perhydroquinolino)dimethoxysilanes, such as bis(2,3-dimethylperhydroquinolino)dimethoxysilane, bis(2,4-dimethylperhydroquinolino)dimethoxysilane, bis(2,5-dimethylperhydroquinolino)dimethoxysilane, bis(2,6-dimethylperhydroquinolino)dimethoxysilane, bis(2,7-dimethylperhydroquinolino)dimethoxysilane, bis (2,8-dimethylperhydroquinolino)dimethoxysilane, bis(2,9-dimethylperhydroquinolino)dimethoxysilane, bis(2,10-dimethylperhydroquinolino)dimethoxysilane, bis(3,4-dimethylperhydroquinolino)dimethoxysilane, bis(3,5-dimethylperhydroquinolino)dimethoxysilane, bis(3,6 dimethylperhydroquinolino)dimethoxysilane, bis(3,7-dimethylperhydroquinolino)dimethoxysilane, bis(3,8-dimethylperhydroquinolino)dimethoxysilane, bis(3,9-dimethylperhydroquinolino)dimethoxysilane, bis(3,10-dimethylperhydroquinolino)dimethoxysilane, bis(4,5-dimethylperhydroquinolino) dimethoxysilane, bis(4,6-dimethylperhydroquinolino)dimethoxysilane, bis(4,7-dimethylperhydroquinolino)dimethoxysilane, bis(4,8-dimethylperhydroquinolino)dimethoxysilane, bis(4,9-dimethylperhydroquinolino)dimethoxysilane, bis(4,10-dimethylperhydroquinolino)dimethoxysilane, bis(5,6-dimethylperhydroquinolino)dimethoxysilane, bis (5,7-dimethylperhydroquinolino)dimethoxysilane, bis(5,8-dimethylperhydroquinolino)dimethoxysilane, bis(5,9-dimethylperhydroquinolino)dimethoxysilane, bis(5,10-dimethylperhydroquinolino)dimethoxysilane, bis(6,7-dimethylperhydroquinolino)dimethoxysilane, bis(6,8-dimethylperhydroquinolino)dimethoxysilane, bis(6,9-dimethylperhydroquinolino)dimethoxysilane, bis(6,10-dimethylperhydroquinolino)dimethoxysilane, bis(7,8-dimethylperhydroquinolino)dimethoxysilane, bis(7,9,-dimethylperhydroquinolino)dimethoxysilane, bis(7,10-dimethylperhydroquinolino) dimethoxysilane, bis(8,9-dimethylperhydroquinolino)dimethoxysilane; bis(.8,10-dimethylperhydroquinolino)dimethoxysilane and bis(9,10-dimethylperhydroquinolino)dimethoxysilane;

bis(trimethyl-substituted perhydroquinolino)dimethoxysilanes, such as bis(2,3,4-trimethylperhydroquinolino)dimethoxysilane, bis(3,4,5-trimethylperhydroquinolino)dimethoxysilane, bis(4,5,6-trimethylperhydroquinolino)dimethoxysilane, bis(5,6,7-trimethylperhydroquinolino)dimethoxysilane, bis(6,7,8-trimethylperhydroquinolino)dimethoxysilane, bis(7,8,9-trimethylperhydroquinolino)dimethoxysilane and bis(8,9,10-trimethylperhydroquinolino)dimethoxysilane; and

(perhydroquinolino)(2-methylperhydroquinolino)dimethoxysilane, (perhydroquinolino) (3-methylperhydroquinolino) dimethoxysilane, (perhydroquinolino) (4-methylperhydroquinolino)dimethoxysilane, (perhydroquinolino) (5-methylperhydroquinolino)dimethoxysilane, (perhydroquinolino)(6-methylperhydroquinolino)dimethoxysilane, (perhydroquinolino)(7-methylperhydroquinolino)dimethoxysilane, (perhydroquinolino) (8-methylperhydroquinolino)dimethoxysilane, (perhydroquinolino)(9-methylperhydroquinolino)dimethoxysilane and (perhydroquinolino)(10-methylperhydroquinolino)dimethoxysilane.

Of the above compounds, bis(perhydroquinolino)dimethoxysilane is preferable.

Examples of the bisperhydroisoquinolino compounds include:

bis(perhydroisoquinolino)dimethoxysilane;

bis(methyl-substituted perhydroisoquinolino)dimethoxysilanes, such as bis(1-methylperhydroisoquinolino)dimethoxysilane, bis(3-methylperhydroisoquinolino)dimethoxysilane, bis(4-methylperhydroisoquinolino)dimethoxysilane, bis(5-methylperhydroisoquinolino)dimethoxysilane, bis(6-methylperhydroisoquinolino)dimethoxysilane, bis(7-methylperhydroisoquinolino)dimethoxysilane, bis(8-methylperhydroisoquinolino)dimethoxysilane, bis(9-methylperhydroisoquinolino)dimethoxysilane and bis(10-methylperhydroisoquinolino)dimethoxysilane;

bis(dimethyl-substituted perhydroisoquinolino)dimethoxysilanes, such as bis(1,3-dimethylperhydroisoquinolino)dimethoxysilane., bis(1,4-dimethylperhydroisoquinolino)dimethoxysilane, bis(1,5 dimethylperhydroisoquinolino) dimethoxysilane, bis(1,6-dimethylperhydroisoquinolino)dimethoxysilane, bis(1,7-dimethylperhydroisoquinolino) dimethoxysilane, bis(1,8-dimethylperhydroisoquinolino)dimethoxysilane, bis(1,9-dimethylperhydroisoquinolino) dimethoxysilane, bis(1,10-dimethylperhydroisoquinolino)dimethoxysilane, bis(3,4-dimethylperhydroisoquinolino) dimethoxysilane, bis(3,5-dimethylperhydroisoquinolino)dimethoxysilane, bis(3,6-dimethylperhydroisoquinolino) dimethoxysilane, bis(3,7-dimethylperhydroisoquinolino)dimethoxysilane, bis(3,8-dimethylperhydroisoquinolino) dimethoxysilane, bis(3,9-dimethylperhydroisoquinolino)dimethoxysilane, bis(3,10-dimethylperhydroisoquinolino) dimethoxysilane, bis(4,5-dimethylperhydroisoquinolino)dimethoxysilane, bis(4,6-dimethylperhydroisoquinolino) dimethoxysilane, bis(4,7-dimethylperhydroisoquinolino)dimethoxysilane, bis(4,8-dimethylperhydroisoquinolino) dimethoxysilane, bis(4,9-dimethylperhydroisoquinolino)dimethoxysilane, bis(4,10-dimethylperhydroisoquinolino) dimethoxysilane, bis,(5,6-dimethylperhydroisoquinolino)dimethoxysilane, bis(5,7-dimethylperhydroisoquinolino) dimethoxysilane, bis(5,8-dimethylperhydroisoquinolino)dimethoxysilane, bis(5,9-dimethylperhydroisoquinolino) dimethoxysilane, bis(5,10-dimethylperhydroisoquinolino)dimethoxysilane, bis(6,7-dimethylperhydroisoquinolino) dimethoxysilane, bis(6,8-dimethylperhydroisoquinolino)dimethoxysilane, bis(6,9-dimethylperhydroisoquinolino) dimethoxysilane, bis(6,10-dimethylperhydroisoquinolino)dimethoxysilane, bis(7,8-dimethylperhydroisoquinolino) dimethoxysilane, bis(7,9-dimethylperhydroisoquinolino)dimethoxysilane, bis(7,10-dimethylperhydroisoquinolino) dimethoxysilane, bis(8;9-dimethylperhydroisoquinolino)dimethoxysilane, bis(8,10-dimethylperhydroisoquinolino) dimethoxysilane and bis(9,10-dimethylperhydroisoquinolino)dimethoxysilane;

bis(trimethyl-substituted perhydroisoquinolino)dimethoxysilanes, such as bis(1,3,4-trimethylperhydroisoquinolino) dimethoxysilane, bis(3,4,5-trimethylperhydroisoquinolino)dimethoxysilane, bis(4,5,6-trimethylperhydroisoquinolino)dimethoxysilane, bis(5,6,7-trimethylperhydroisoquinolino)dimethoxysilane, bis(6,7,8-trimethylperhydroisoquinolino)dimethoxysilane, bis(7,8,9-trimethylperhydroisoquinolino)dimethoxysilane and bis(8,9,10-trimethylperhydroisoquinolino)dimethoxysilane; and

(perhydroisoquinolino)(2-methylperhydroisoquinolino)dimethoxysilane, (perhydroisoquinolino)(3-methylperhydroisoquinolino)dimethoxysilane, (perhydroisoquinolino)(4-methylperhydroisoquinolino)dimethoxysilane, (perhydroisoquinolino)(5-methylperhydroisoquinolino)dimethoxysilane, (perhydroisoquinolino)(6-methylperhydroisoquinolino) dimethoxysilane, (perhydroisoquinolino)(7-methylperhydroisoquinolino)dimethoxysilane, (perhydroisoquinolino) (8-methylperhydroisoquinolino)dimethoxysilane, (perhydroisoquinolino)(9-methylperhydroisoquinolino)dimethoxysilane and (perhydroisoquinolino)(10-methylperhydroisoquinolino)dimethoxysilane.

Of the above compounds, bis(perhydroisoquinolino)dimethoxysilane is preferable.

Examples of the (perhydroquinolino)(perhydroisoquinolino) compounds include:

(perhydroquinolino)(perhydroisoquinolino)dimethoxysilane, (perhydroquinolino)(1-methylperhydroisoquinolino) dimethoxysilane, (perhydroquinolino)(3-methylperhydroisoquinolino)dimethoxysilane, (perhydroquinolino)(4-methylperhydroisoquinolino)dimethoxysilane, (perhydroquinolino)(5-methylperhydroisoquinolino)dimethoxysilane, (perhydroquinolino)(6-methylperhydroisoquinolino)dimethoxysilane, (perhydroquinolino)(7-methylperhydroisoquinolino)dimethoxysilane, (perhydroquinolino)(8-methylperhydroisoquinolino)dimethoxysilane, (perhydroquinolino)(9-methylperhydroisoquinolino)dimethoxysilane, (perhydroquinolino)(10-methylperhydroisoquinolino)dimethoxysilane, (2-methylperhydroquinolino)(perhydroisoquinolino)-dimethoxysilane, (3-methylperhydroquinolino)(perhydroisoquinolino)-dimethoxysilane, (4-methylperhydroquinolino)(perhydroisoquinolino)dimethoxysilane, (5methylperhydroquinolino)(perhydroisoquinolino)-dimethoxysilane, (6-methylperhydroquinolino)(perhydroisoquinolino)-dimethoxysilane, (7-methylperhydroquinolino)(perhydroisoquinolino)-dimethoxysilane, (8-methylperhydroquinolino)(perhydroisoquinolino) dimethoxysilane, (9-methylperhydroquinolino)(perhydroisoquinolino)-dimethoxysilane, (10-methylperhydroquinolino)(perhydroisoquinolino)-dimethoxysilane, (2-methylperhydroquinolino)(1-methylperhydroisoquinolino)dimethoxysilane, (3-methylperhydroquinolino)(3-methylperhydroisoquinolino)dimethoxysilane, (4-methylperhydroquinolino) (4-methylperhydroisoquinolino)dimethoxysilane, (5methylperhy.droquinolino)(5-methylperhydroisoquinolino)dimethoxysilane, (6-methylperhydroquinolino)(6-methylperhydroisoquinolino)dimethoxysilane, (7-methylperhydroquinolino) (7-methylperhydroisoquinolino)dimethoxysilane, (8-methylperhydroquinolino) (8-methylperhydroisoquinolino)dimethoxysilane, (9-methylperhydroquinolino)(9-methylperhydroisoquinolino)dimethoxysilane and (10-methylperhydroquinolino)(10-methylperhydroisoquinolino)dimethoxysilane.

Of the above compounds,
(perhydroquinolino)(perhydroisoquinolino)dimethoxysilane is preferable.
Examples of the bis(1,2,3,4-tetrahydroquinolino) compounds include:

bis(1,2,3,4-tetrahydroquinolino)dimethoxysilane, bis(methyl-substituted 1,2,3,4-tetrahydroquinolino)dimethoxysilane compounds, such as bis(2-methyl-1,2,3,4-tetrahydroquinolino)dimethoxysilane, bis(3-methyl-1,2,3,4-tetrahydroquinolino)dimethoxysilane, bis(4-methyl-1,2,3,4-tetrahydroquinolino)dimethoxysilane, bis(6-methyl-1,2,3,4-tetrahydroquinolino)dimethoxysilane, bis(7-methyl-1,2,3,4-tetrahydroquinolino)dimethoxysilane, bis(8-methyl-1,2,3,4-tetrahydroquinolino)dimethoxysilane and bis(9-methyl-1,2,3,4-tetrahydroquinolino)dimethoxysilane;
bis(dimethyl-substituted 1,2,3,4-tetrahydroquinolino)dimethoxysilane compounds, such as bis(2,3-dimethyl-1,2,3,4-tetrahydroquinolino)dimethoxysilane, bis(2,4-dimethyl-1,2,3,4-tetrahydroquinolino)dimethoxysilane, bis(2,6-dimethyl-1,2,3,4-tetrahydroquinolino)dimethoxysilane, bis(2,7-dimethyl-1,2,3,4-tetrahydroquinolino)dimethoxysilane, bis(2,8-dimethyl-1,2,3,4-tetrahydroquinolino)dimethoxysilane, bis(2,9-dimethyl-1,2,3,4-tetrahydroquinolino)dimethoxysilane, bis(3,4-dimethyl-1,2,3,4-tetrahydroquinolino)dimethoxysilane, bis(3,6-dimethyl-1,2,3,4-tetrahydroquinolino)dimethoxysilane, bis(3,7-dimethyl-1,2,3,4-tetrahydroquinolino)dimethoxysilane, bis(3,8-dimethyl-1,2,3,4-tetrahydroquinolino)dimethoxysilane, bis(3,9-dimethyl-1,2,3,4-tetrahydroquinolino)dimethoxysilane, bis(4,6-dimethyl-1,2,3,4-tetrahydroquinolino)dimethoxysilane, bis(4,7-dimethyl-1,2,3,4-tetrahydroquinolino)dimethoxysilane, bis (4,8-dimethyl-1,2,3,4-tetrahydroquinolino)dimethoxysilane, bis(4,9-dimethyl-1,2,3,4-tetrahydroquinolino)dimethoxysilane, bis(6,7-dimethyl-1,2,3,4-tetrahydroquinolino)dimethoxysilane, bis(6,8-dimethyl-1,2,3,4-tetrahydrbquinolino)dimethoxysilane, bis(6,9-dimethyl-1,2,3,4-tetrahydroquinolino)dimethoxysilane, bis(7,8-dimethyl-1,2,3,4-tetrahydroquinolino)dimethoxysilane, bis(7,9-dimethyl-1,2,3,4-tetrahydroquinolino)dimethoxysilane and bis(8,9-dimethyl-1,2,3,4-tetrahydroquinolino)dimethoxysilane;
bis(trimethyl-substituted 1,2,3,4-tetrahydroquinolino)dimethoxysilane compounds, such as bis(2,3,4-trimethyl-1,2,3,4-tetrahydroquinolino)dimethoxysilane, bis(2,3,6-trimethyl-1,2,3,4-tetrahydroquinolino)dimethoxysilane, bis (2,3,7-trimethyl-1,2,3,4-tetrahydroquinolino)dimethoxysilane, bis(2,3,8-trimethyl-1,2,3,4-tetrahydroquinolino)dimethoxysilane, bis(2,3,9-trimethyl-1,2;3,4-tetrahydroquinolino)dimethoxysilane, bis(3,4,6-trimethyl-1,2,3,4-tetrahydroquinolino)dimethoxysilane, bis(3,4,7-trimethyl-1,2,3,4-tetrahydroquinolino)dimethoxysilane, bis(3,4,8-trimethyl-1,2,3,-4-tetrahydroquinolino)dimethoxysilane, bis(3,4,9-trimethyl-1,2,3,4-tetrahydroquinolino)dimethoxysilane, bis (4,6,7-trimethyl-1,2,3,4-tetrahydroquinolino)dimethoxysilane, bis(4,6,8-trimethyl-1,2,3,4-tetrahydroquinolino)dimethoxysilane, bis(4,6,9-trimethyl-1,2,3,4-tetrahydroquinolino)dimethoxysilane, bis(6,7,8-trimethyl-1,2,3,4-tetrahydroquinolino)dimethoxysilane, bis(6,7,9-trimethyl-1,2,3,4-tetrahydroquinolinb)dimethoxysilane and bis(7,8,9-trimethyl-1,2,3,4-tetrahydroquinolino)dimethoxysilane; and
bis(tetramethyl-substituted 1,2,3,4-tetrahydroquinolino)dimethoxysilane compounds, such as bis(2,3,4,6-tetramethyl-1,2,3,4-tetrahydroquinolino)dimethoxysilane, bis(2,3,4,7-tetramethyl-1,2,3,4-tetrahydroquinolino)dimethoxysilane, bis(2,3,4,8-tetramethyl-1,2,3,4-tetrahydroquinolino)dimethoxysilane, bis(2,3,4,9-tetramethyl-1,2,3,4-tetrahydroquinolino)dimethoxysilane, bis(3,4,6,7-tetramethyl-1,2,3,4-tetrahydroquinolino)dimethoxysilane, bis(3,4,6,8-tetramethyl-1,2,3,4-tetrahydroquinolino)dimethoxysilane, bis(3,4,6,9-tetramethyl-1,2,3,4-tetrahydroquinolino)dimethoxysilane, bis(4,6,7,8-tetramethyl-1,2,3,4-tetrahydroquinolino)dimethoxysilane, bis(4,6,7,9-tetramethyl-1,2,3,4-tetrahydroquinolino)dimethoxysilane and bis(6,7,8,9-tetramethyl-1,2,3,4-tetrahydroquinolino)dimethoxysilane.

Of the above compounds, bis(1,2,3,4-tetrahydroquinolino)dimethoxysilane is preferable.
Examples of the organosilicon compounds represented by the formula (3) include compounds represented by the following chemical structural formulas.

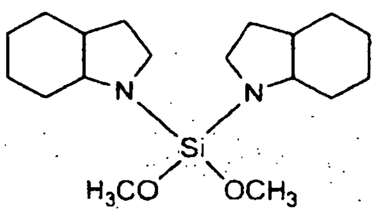

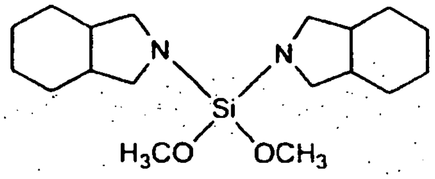

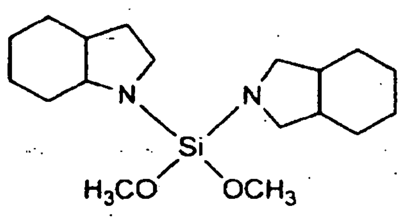

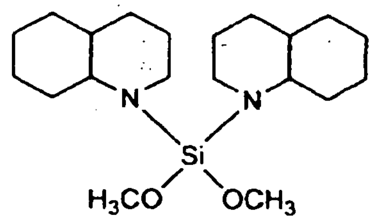

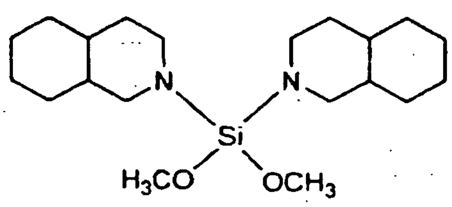

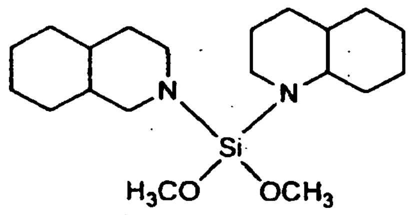

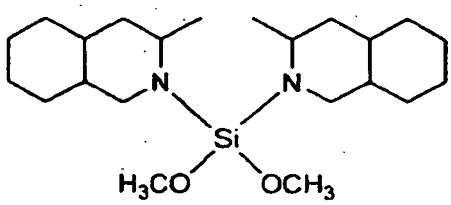

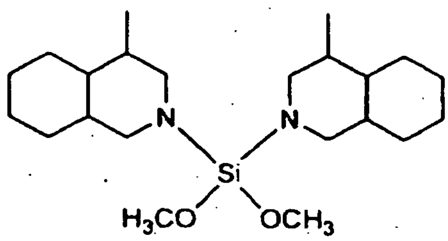

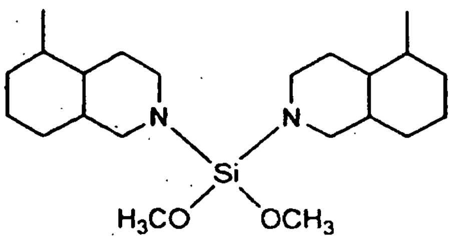

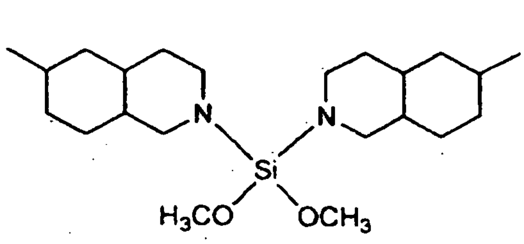

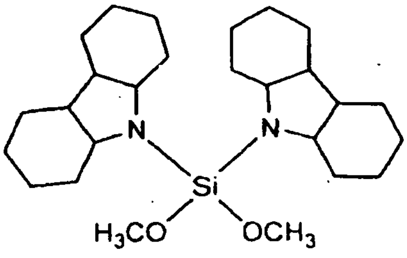

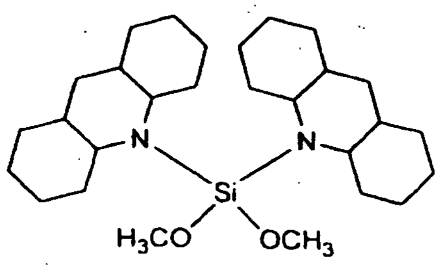

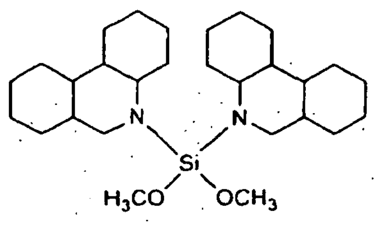
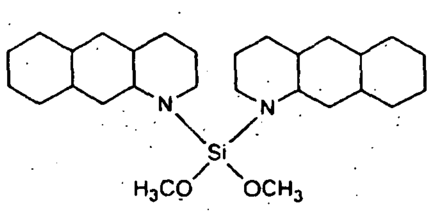

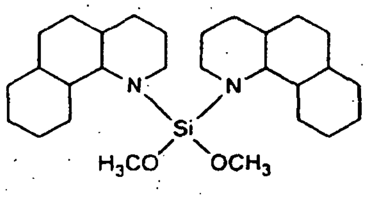
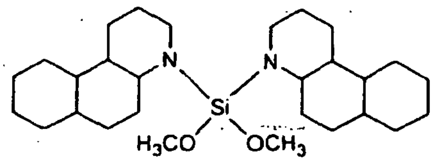

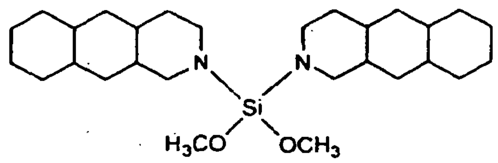
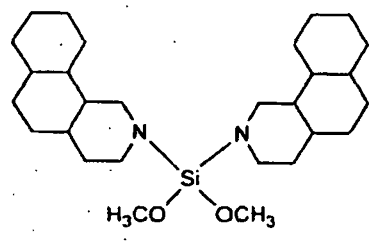

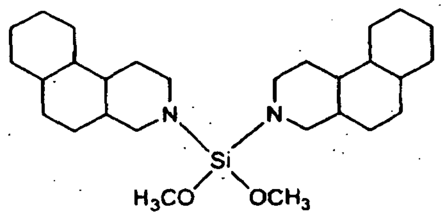
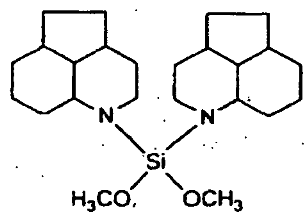

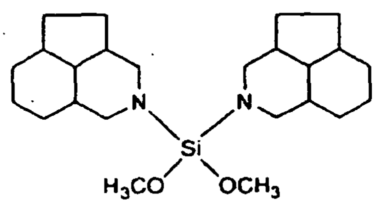
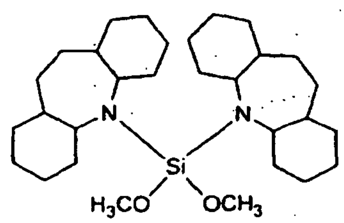

The organosilicon compound represented by the formula (4) is, for example, a perhydroquinolino compound represented by the following formula (5) or a perhydroisoquinolino compound represented by the following formula (6):

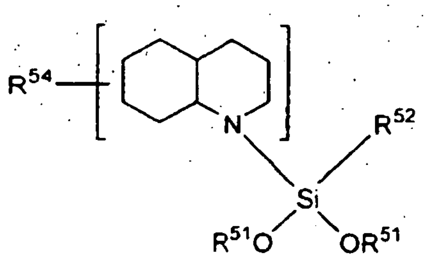

··· (5)

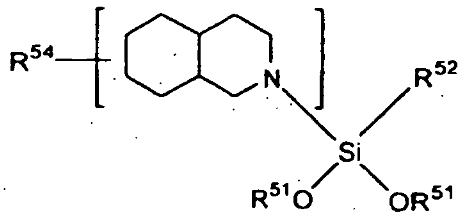

··· (6)

wherein $R^{54}$ is a substituent on the saturated ring of $R^{53}N$ and is a hydrogen atom, a saturated aliphatic hydrocarbon group of 1 to 24 carbon atom or an unsaturated hydrocarbon group of 2 to 24 carbon atoms. $R^{54}$ is preferably hydrogen, methyl, ethyl, n-propyl, isopropyl, n-butyl, isobutyl, tert-butyl, sec-butyl or the like. The number of hydrocarbon substituents on the saturated ring of $R^{53}N$ may be 1 or more.

Examples of the compounds represented by the formula (5) include:

perhydroquinolinosilane compounds, such as ethyl(perhydroquinolino)dimethoxysilane, n-propyl(perhydroquinolino)dimethoxysilane, isopropyl(perhydroquinolino)dimethoxysilane, n-butyl(perhydroquinolino)dimethoxysilane, isobutyl(perhydroquinolino)dimethoxysilane, tert-butyl(perhydroquinolino)dimethoxysilane, sec-butyl (perhydroquinolino)dimethoxysilane, n-pentyl(perhydroquinolino)dimethoxysilane, isopentyl(perhydroquinolino)dimethoxysilane, cyclopentyl(perhydroquinolino)dimethoxysilane, n-hexyl(perhydroquinolino)dimethoxysilane, cyclohexyl(perhydroquinolino)dimethoxysilane, thexyl(perhydroquinolino)dimethoxysilane, n-octyl(perhydroquinolino)dimethoxysilane, phenyl(perhydroquinolino)dimethoxysilane, piperidino(perhydroquinolino)dimethoxysilane, diethylamino (perhydroquinolino)dimethoxysilane, isopropoxy(perhydroquinolino)dimethoxysilane and tert-butoxy(perhydroquinolino)dimethoxysilane;

2-methylperhydroquinolinosilane compounds, such as ethyl(2-methylperhydroquinolino)dimethoxysilane, n-propyl (2-methylperhydroquinolino)dimethoxysilane, isopropyl(2-methylperhydroquinolino)dimethoxysilane, n-butyl(2-methylperhydroquinolino)dimethoxysilane, isobutyl(2-methylperhydroquinolino)dimethoxysilane, tert-butyl(2-methylperhydroquinolino)dimethoxysilane, sec-butyl(2-methylperhydroquinolino)dimethoxysilane, n-pentyl(2-methylperhydroquinolino)dimethoxysilane, isopentyl(2-methylperhydroquinolino)dimethoxysilane, cyclopentyl(2-methylperhydroquinolino)dimethoxysilane, n-hexyl(2-methylperhydroquinolino)dimethoxysilane, cyclohexyl(2-methylperhydroquinolino)dimethoxysilane, thexyl(2-methylperhydroquinolino)dimethoxysilane, n-octyl(2-methylperhydroquinolino)dimethoxysilane, n-decyl(2-methylperhydroquinolino)dimethoxysilane, 2-decalino(2-methylperhydroquinolino) dimethoxysilane and phenyl(2-methylperhydroquinolino)dimethoxysilane; and

methyl-substituted perhydroquinolinosilane compounds, such as isopropyl(3-methylperhydroquinolino)dimethoxysilane, isopropyl(4-methylperhydroquinolino)dimethoxysilane, isopropyl(5-methylperhydroquinolino)dimethoxysilane, isopropyl(6-methylperhydroquinolino)dimethoxysilane, isopropyl(7-methylperhydroquinolino)dimethoxysilane, isopropyl(8-methylperhydroquinolino)dimethoxysilane, isopropyl(9-methylperhydroquinolino)dimethoxysilane and isopropyl(10-methylperhydroquinolino)dimethoxysilane.

Of the above compounds,
ethyl(perhydroquinolino)dimethoxysilane, n-propyl(perhydroquinolino)dimethoxysilane, isopropyl(perhydroquinolino) dimethoxysilane, n-butyl(perhydroquinolino)dimethoxysilane isobutyl(perhydroquinolino)dimethoxysilane, tert-butyl (perhydroquinolino) dimethoxysilane, sec-butyl(perhydroquinolino)dimethoxysilane, cyclopentyl(perhydroquinolino)dimethoxysilane, n-hexyl(perhydroquinolino)dimethoxysilane, piperidino(perhydroquinolino)dimethoxysilane, diethylamino(perhydroquinolino)dimethoxysilane and tert-butoxy(perhydroquinolino)dimethoxysilane are preferable.

Examples of the compounds represented by the formula (6) include:

perhydroisoquinolinosilane compounds, such as ethyl(perhydroisoquinolino)dimethoxysilane, n-propyl(perhydroisoquinolino)dimethoxysilane, isopropyl(perhydroisoquinolino)dimethoxysilane, n-butyl(perhydroisoquinolino)dimethoxysilane, isobutyl(perhydroisoquinolino)dimethoxysilane, tert-butyl(perhydroisoquinolino)dimethoxysilane, sec-butyl(perhydroisoquinolino)dimethoxysilane, n-pentyl(perhydroisoquinolino)dimethoxysilane, isopentyl(perhydroisoquinolino)dimethoxysilane, cyclopentyl(perhydroisoquinolino)dimethoxysilane, n-hexyl(perhydroisoquinolino)dimethoxysilane, cyclohexyl(perhydroisoquinolino)dimethoxysilane, thexyl(perhydroisoquinolino)dimethoxysilane, n-octyl(perhydroisoquinolino)dimethoxysilane, n-decyl(perhydroisoquinolino)dimethoxysilane, 2-decalino(perhydroisoquinolino)dimethoxysilane, phenyl(perhydroisoquinolino)dimethoxysilane, piperidino(perhydroisoquinolino)dimethoxysilane, diethylamino(perhydroisoquinolino)dimethoxysilane, isopropoxy(perhydroisoquinolino)dimethoxysilane and tert-butoxy(perhydroisoquinolino)dimethoxysilane;

2-methylperhydroisoquinolinosilane compounds, such as ethyl(2-methylperhydroisoquinolino)dimethoxysilane, n-propyl(2-methylperhydroisoquinolino)dimethoxysilane, isopropyl(2-methylperhydroisoquinolino)dimethoxysilane, n-butyl(2-methylperhydroisoquinolino)dimethoxysilane, isobutyl(2-methylperhydroisoquinolino)dimethoxysilane, tert-butyl(2-methylperhydroisoquinolino)dimethoxysilane, sec-butyl(2-methylperhydroisoquinolino)dimethoxysilane, n-pentyl(2-methylperhydroisoquinolino)dimethoxysilane, isopentyl(2-methylperhydroisoquinolino)dimethoxysilane, cyclopentyl(2-methylperhydroisoquinolino)dimethoxysilane, n-hexyl(2-methylperhydroisoquinolino)dimethoxysilane, cyclohexyl(2-methylperhydroisoquinolino)dimethoxysilane, thexyl(2-methylperhydroisoquinolino)dimethoxysilane, n-octyl(2-methylperhydroisoquinolino)dimethoxysilane and phenyl(2-methylperhydroisoquinolino)dimethoxysilane; and

methyl-substituted perhydroisoquinolinosilane compounds, such as isopropyl(3-methylperhydroisoquinolino)dimethoxysilane, isopropyl(4-methylperhydroisoquiriolino)dimethoxysilane, isopropyl(5-methylperhydroisoquinolino)dimethoxysilane, isopropyl(6-methylperhydroisoquinolino)dimethoxysilane, isopropyl(7-methylperhydroisoquinolino)dimethoxysilane, isopropyl(8-methylperhydroisoquinolino)dimethoxysilane, isopropyl(9-methylperhydroisoquinolino)dimethoxysilane and isopropyl(10-methylperhydroisoquinolino)dimethoxysilane.

Of the above compounds, ethyl(perhydroisoquinolino)dimethoxysilane, n-propyl(perhydroisoquinolino)dimethoxysilane, isopropyl(perhydroisoquinolino)dimethoxysilane, n-butyl(perhydroisoquinolino)dimethoxysilane, isobutyl(perhydroisoquinolino)dimethoxysilane, tert-butyl(perhydroisoquinolino)dimethoxysilane, sec-butyl(perhydroisoquinolino)dimethoxysilane, cyclopentyl(perhydroisoquinolino)dimethoxysilane, n-hexyl(perhydroisoquinolino)dimethoxysilane, piperidino(perhydroisoquinolino)dimethoxysilane, tert-butoxy(perhydroisoquinolino)dimethoxysilane and diethylamino(perhydroisoquinolino)dimethoxysilane are preferable.

Examples of the organosilicon compounds represented by the formula (6) include compounds represented by the following chemical structural formulas.

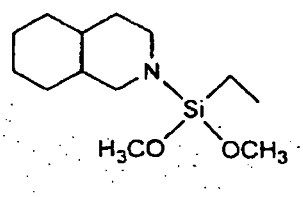

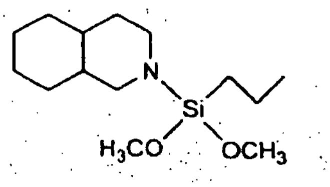

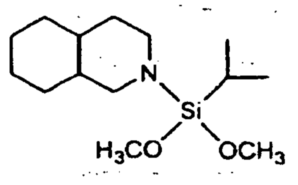

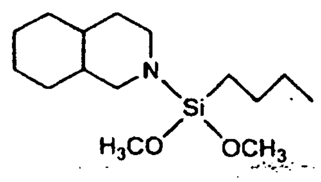

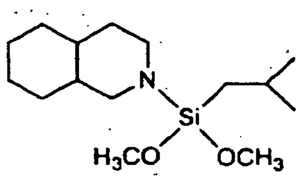
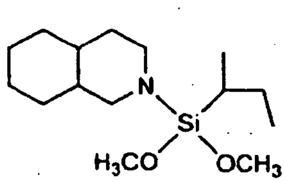

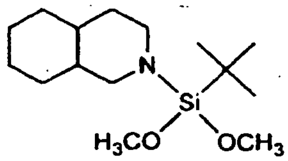
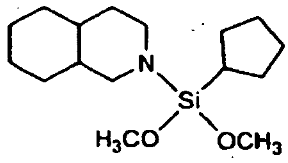

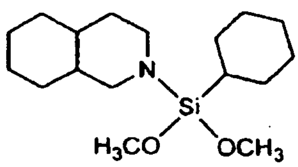
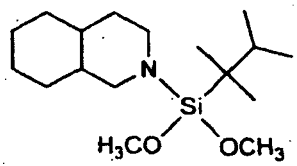

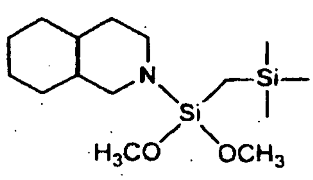
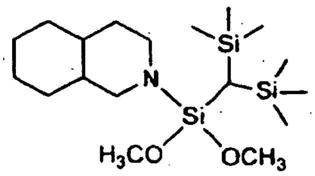

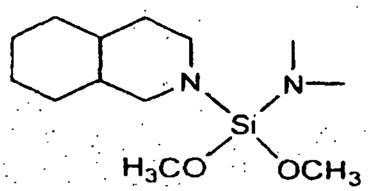
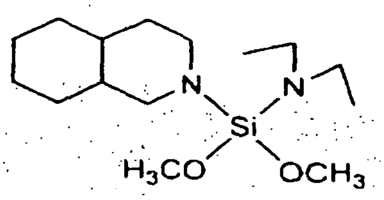

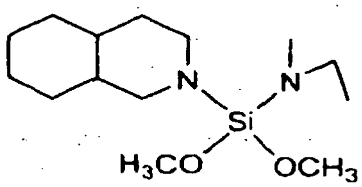
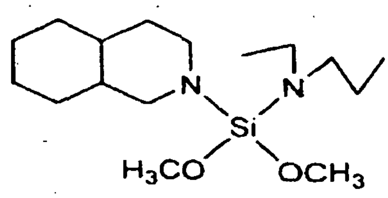

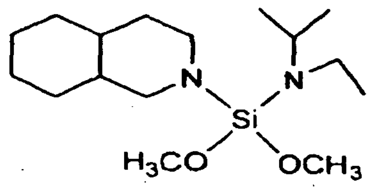

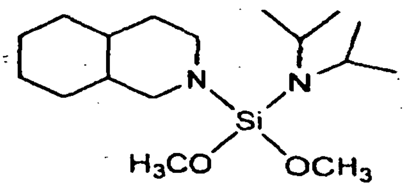

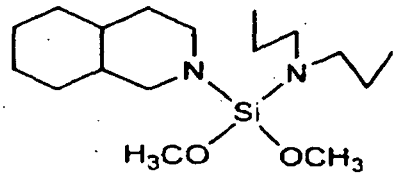

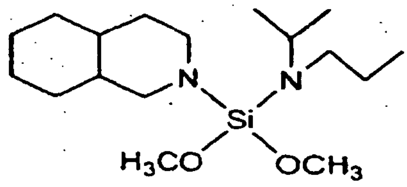

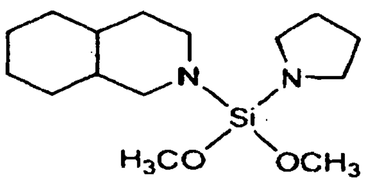

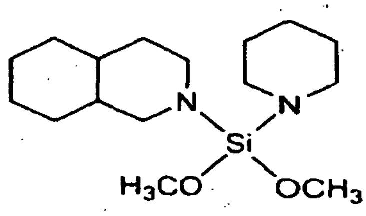

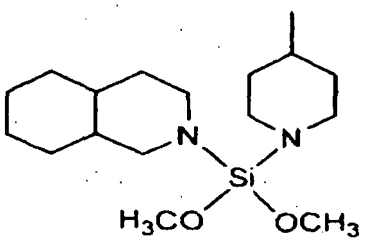

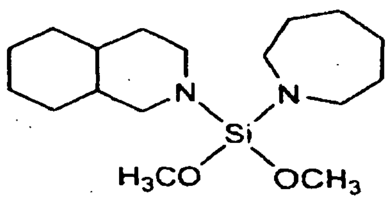

In the above-mentioned organosilicon compounds having two saturated polycyclic amino groups, geometrical isomers, namely, cis form and trans form, are present at the saturated polycyclic amino group portion, and therefore, (trans-polycyclic amino)(trans-polycyclic amino)dialkoxysilane, (cis-polycyclic amino)(cis-polycyclic amino)dialkoxysilane and (trans-polycyclic amino)(cis-polycyclic amino)dialkoxysilane are present. Examples of such compounds include bis(trans-perhydroquinolino)dimethoxysilane, bis(cis-perhydroquinolino)dimethoxysilane, bis(trans-perhydroisoquinolino)dimethoxysilane and bis(cis-perhydroisoquinolino)dimethoxysilane.

In the preparation of the crystalline propylene block copolymer (A) using the catalyst comprising solid titanium catalyst component (i), the organomatallic compound catalyst component (ii) and the electron donor component (iii), prepolymerization may be carried out in advance.

In the prepolymerization, an olefin is polymerized in the presence of the solid titanium catalyst component (i), the organometallic compound catalyst component (ii), and if necessary, the electron donor component (iii).

Examples of the olefins employable in the prepolymerization include straight-chain olefins, such as ethylene, propylene, 1-butene, 1-octene, 1-hexadecene and 1-eicosene; and branched olefins, such as 3-methyl-1-butene, 3-methyl-1-pentene, 3-ethyl-1-pentene, 4-methyl-1-pentene, 4-methyl-1-hexene, 4,4-dimethyl-l-hexene, 4,4-dimethyl-1-pentene, 4-ethyl-1-hexene, 3-ethyl-1-hexene, allylnaphthalene, allylnorbornane, styrene, dimethylstyrenes, vinylnaphthalenes, allyltoluenes, allylbenzene, vinylcyclohexane, vinylcyclopentane, vinylcycloheptane and allyltrialkylsilanes. These olefins may be copolymerized.

The prepolymerization is desirably carried out in such a manner that a polymer is produced in an amount of

about 0.1 to 1000 g, preferably about 0.3 to 500 g, based on 1 g of the solid titanium catalyst component (i). If the amount of the prepolymer is too large, production efficiency of the (co)polymer in the polymerization is sometimes lowered. In the prepolymerization, the catalyst concentration considerably higher than that in the system of the polymerization can be used.

In the polymerization, the solid titanium catalyst component (i) (or prepolymerized catalyst) is desirably used in an amount of about 0.0001 to 50 mmol, preferably about 0.001 to 10 mmol, in terms of a titanium atom, based on 1 liter of the polymerization volume. The organometallic compound catalyst component (ii) is desirably used in an amount of about 1 to 2000 mol, preferably about 2 to 500 mol, in terms of a metal atom, based on 1 mol of the titanium atom in the polymerization system. The organosilicon compound catalyst component (iii) is desirably used in an amount of about 0.001 to 50 mol, preferably about 0.01 to 20 mol, based on 1 mol of the metal atom of the organometallic compound catalyst component (ii).

As the polymerization medium, inert hydrocarbon may be used, or liquid propylene may be used. The polymerization conditions in each step are as follows. The polymerization temperature is in the range of about - 50 to +200C°, preferably about 20 to 100°C, and the polymerization pressure is in the range of atmospheric pressure to 9.8 MPa (gauge pressure), preferably about 0.2 to 4.9 MPa (gauge pressure).

(B) Elastomeric polymer

The elastomeric polymer (B) for use in the present invention is preferably an olefin type elastomer or a styrene type elastomer.

Olefin type elastomer

As the olefin type elastomer, a copolymer of two or more α-olefins selected from α-olefins of 2 to 20 carbon atoms, preferably 2 to 10 carbon atoms, is employable. Examples of the α-olefins of 2 to 20 carbon atoms include ethylene, propylene, 1-butene, 3-methyl-1-pentene, 4-methyl-1-pentene, 1-hexene, 1-octene, 1-decene, 1-tetradecene and 1-octadecene.

Examples of the olefin type elastomers include non-crystalline or low-crystalline α-olefin copolymers containing no diene component, such as an ethylene/propylene copolymer rubber, an ethylene/1-butene copolymer rubber, an ethylene/hexene copolymer rubber, an ethylene/1-octene copolymer rubber, an ethylene/decene copolymer rubber, a propylene/ethylene copolymer rubber, a propylene/butene copolymer and a propylene/butene/ethylene copolymer; ethylene/propylene/non-conjugated diene copolymer rubbers, such as an ethylene/propylene/dicyclopentadiene copolymer rubber, an ethylene/propylene/1,4-hexadiene copolymer rubber, an ethylene/propylene/cyclooctadiene copolymer rubber, an ethylene/propylene/methylenenorbornene copolymer rubber and an ethylene/propylene/ethylidenenorbornene copolymer rubber; and an ethylene/butadiene copolymer rubber.

As the olefin type elastomer, a copolymer of ethylene and an α-olefin of 4 to 10 carbon atoms is preferable. When a copolymer of ethylene and an α-olefin of 4 to 10 carbon atoms is used as the elastomeric polymer (B), a composition having a good balance between rigidity and impact resistance can be obtained.

Styrene type elastomer

The styrene type elastomer is an elastomer containing not less than 20% of styrene units.

Examples of the styrene type elastomers include SBR (styrene/butadiene random copolymer), SBS (styrene/butadiene/styrene block copolymer), SEBS (styrene/ethylene/butylene/styrene block copolymer), polystyrene/polyisoprene block copolymer, SIS (styrene/isoprene/styrene block copolymer) and SIS hydrogenation product (SEPS). The styrene type elastomers are on the market under the trade names of, for example, Kraton (available from Shell Chemicals), Cariflex TR (available from Shell Chemicals), Solprene (available from Phillips Petroleum Co.), Europrene SOL T (available from Enichem Elastomeri S.r.l.), Tufprene (available from Asahi Kasei Corporation), Solprene T (available from Japan Elastomer Co., Ltd.), JSRTR (available from JSR Corporation), Denka STR (available from Denki Kagaku Kogyo K.K.), Quintac (available from Zeon Corporation), Kraton G (available from Shell Chemicals) and Tuftec (available from Asahi Kasei Corporation).

In the present invention, SEBS is preferably employed as the styrene type elastomer.

The SEBS is generally known as a hydrogenation product of SBS (styrene/butadiene/styrene block copolymer) that is a styrene/butadiene type block copolymer.

The SEBS is a thermoplastic elastomer consisting of polystyrene block units and polyethylene/butylene rubber block units. In such SEBS, the polystyrene block unit that is a hard segment forms physical crosslinking (domain) and is present as a crosslinking point of a rubber block unit. The polyethylene/butylene rubber block unit present between the polystyrene block units is a soft segment and has elastomeric properties.

In the SEBS used in the present invention, the polystyrene units are desirably contained in amounts of 14 to 40% by mol. The content of units derived from styrene is a value measured by a conventional method such as infrared spectrophotometry or NMR spectrophotometry.

The SEBS desirably has a melt flow rate (MFR, measured at 230°C under a load of 2.16 kg in accordance with ASTM D 1238) of 0.01 to 100 g/10min, preferably 0.1 to 50 g/10min

In the present invention, SBS and other styrene/conjugated diene copolymers, or their complete or incomplete hydrogenation product can be used together with SEBS.

The intrinsic viscosity [η]e of the elastomeric polymer (B) and the intrinsic viscosity [η]a of the n-decane-soluble portion of the crystalline propylene block copolymer (A) used in the present invention desirably have a relationship of the following formula (7) to each other because the impact strength of the resin composition tends to be less lowered during the residence in a molten state.

$$0.5 \leq [\eta]e/[\eta]a \leq 3.2 \qquad (7)$$

The elastomeric polymer (B) desirably has MFR in the range of 0.5 to 30 g/10min, preferably 2 to 15 g/10min. When an elastomeric polymer having MFR of the above range is used as the elastomeric polymer (B), impact resistance of the composition is excellent and is not easily lowered during the residence of the composition in a molten state.

<u>(C) Inorganic filler</u>

Examples of the inorganic fillers (C) for use in the present invention include talc, clay, calcium carbonate, mica, silicates, carbonates and glass fibers. The inorganic fillers (C) may be used singly or in combination of two or more kinds.

As the inorganic filler (C), talc or calcium carbonate is preferable, and talc is particularly preferable.

Talc having an average particle diameter of 1 to 5 μm, preferably 1 to 3 μm, is desirable.

<u>Composition</u>

The polypropylene resin composition of the present invention contains the crystalline propylene block copolymer (A) in an amount of 55 to 94% by weight, preferably 55 to 85% by weight, the elastomeric polymer (B) in an amount of 1 to 20% by weight, preferably 5 to 15% by weight, and the inorganic filler (C) in an amount of 5 to 25% by weight, preferably 8 to 20% by weight.

In the polypropylene resin composition of the present invention, polymers other than the above polymers and/or additives may be incorporated when needed, within limits not detrimental to the object of the present invention.

Examples of other polymers include low-density polyethylene (LDPE), linear low-density polyethylene (LLDPE) and high-density polyethylene.

Examples of the additives include heat stabilizer, antistatic agent, weathering stabilizer, light stabilizer, anti-aging agent, antioxidant, fatty acid metal salt, softener, dispersant, filler, colorant, lubricant and pigment.

As the antioxidant, any of phenol type, sulfur type and phosphorus type can be added. The amount of the antioxidant added is in the range of 0.01 to 1 part by weight, preferably 0.05 to 0.3 part by weight, based on 100 parts by weight of the crystalline propylene block copolymer (A).

The process for preparing the polypropylene resin composition of the present invention is, for example, a process comprising mixing the propylene block copolymer (A), the elastomeric polymer (B), the inorganic filler (C), and if necessary, additives such as heat stabilizer by a Henschel mixer, a V-blender, a ribbon blender, a tumbling mixer or the like and then extruding the mixture by an extruder or the like to obtain pellets of the desired polypropylene resin composition.

The polypropylene resin composition of the present invention has the following properties:

a ratio of an Izod impact strength (J/m, $IZ_{250-30}$) of a specimen obtained by maintaining the composition at 250°C for 30 minutes in a molten state in a 10 oz injection molding machine and then molding the composition in accordance with the method of ASTM D 256, said Izod impact strength being measured after 48 hours from the molding, to an Izod impact strength (J/m, $IZ_{230-3}$) of a specimen obtained by maintaining the composition at 230°C for 3 minutes in a molten state in the same injection molding machine and then molding the composition by the same method, said Izod impact strength being measured after 48 hours from the molding, satisfies the following formula:

$$1.0 \geq (IZ_{250\text{-}30}/IZ_{230\text{-}3}) \geq 0.5,$$

preferably

$$1.0 \geq (IZ_{250\text{-}30}/IZ_{230\text{-}3}) \geq 0.55,$$

more preferably

$$1.0 \geq (IZ_{250\text{-}30}/IZ_{230\text{-}3}) \geq 0.6.$$

When the $IZ_{250\text{-}30}/IZ_{230\text{-}3}$ value is in the above range, the elastomer component is not separated in the molding machine, and hence lowering of impact strength is small.

The polypropylene resin composition of the present invention is excellent not only in flowability in the molding process but also in a balance of properties such as flexural modulus, impact resistance, hardness and brittle temperature.

Further, the elastomer component has good compatibility with the polypropylene matrix. Therefore, even if the molten resin is resident in an extruder, an injection molding machine or a plunger, the elastomer component is not separated in the molding machine or the like, and hence lowering of impact resistance is small. On this account, the polypropylene resin composition of the present invention can be favorably used as a resin material for injection molding.

Accordingly, the polypropylene resin composition of the present invention is useful as a material for producing automobile interior or exterior trim parts, such as bumper, instrument panel and trim, and household appliances.

**EXAMPLES**

The present invention is further described with reference to the following examples, but it should be construed that the invention is in no way limited to those examples.

Measurements of the properties in the present invention were carried out in accordance with the following methods.

<u>Melt flow rate (MFR)</u>

The melt flow rate was measured in accordance with ASTM D 1238.

<u>Flexural modulus (FM)</u>

The flexural modulus was measured in accordance with ASTM D 790.

<u>Intrinsic viscosity [η]</u>

An intrinsic viscosity [η] measured by dissolving polypropylene in decalin at 135°C was used.

<u>Mw/Mn</u>

Mw/Mn was measured by gel permeation chromatography (GPC). The GPC measuring conditions are as follows.

Apparatus: GPC150CV manufactured by Waters Corporation
Column: PL column (Mixed-B, 350mmx2) available from Polymer Laboratories Ltd.
Data processing device: MILLENNIUM
Measuring temperature: 135°C
Measuring medium: orthodichlorobenzene
Calibration curve: Monodispersed polystyrene of known molecular weight was used.

Mz/Mw

Mz/Mw was measured by GPC.

Isotactic pentad fraction (mmmm fraction)

The isotactic pentad fraction was measured by $^{13}C$-NMR.

Room temperature n-decane-insoluble portion, Room temperature n-decane-soluble portion

The contents of these portions were measured by the aforesaid method.

Izod impact strength (23°C)

The Izod impact strength was measured in accordance with ASTM D 256.

Heat distortion temperature (HDT) (load: 0.45 MPa)

Using an injection molded specimen obtained in the same manner as in the measurement of Izod impact strength, the heat distortion temperature was measured in accordance with ASTM D 648.

Brittle temperature (BT)

The brittle temperature was measured in accordance with ASTM D 746.

Preparation Example 1

Preparation of crystalline propylene block copolymer (A1-1)

Preparation of solid catalyst component

In a 500 ml round flask thoroughly purged with a nitrogen gas and equipped with a stirrer, 10 g of diethoxymagnesium and 500 ml of toluene were placed to give a suspension. To the suspension, 500 ml of titanium tetrachloride at room temperature was added, and with stirring, the temperature of the system was raised up to 50°C. After 52 ml of diisooctyl phthalate was added, the temperature was further raised, and at 100°C, 15 ml of diethyl phthalate was added. Then, the temperature of the system was raised to 115°C, and 40 ml of dimethylpolysiloxane having a viscosity at room temperature of 100 cSt was added to perform reaction for 2 hours. After the reaction was completed, the supernatant liquid was removed, and the remainder was treated with 800 ml of toluene and 200 ml of titanium tetrachloride at 100°C for 15 minutes, followed by washing three times with 1000 ml of toluene at 100°C. Thereafter, 8 g of sodium stearate, 800 ml of toluene and 200 ml of titanium tetrachloride were freshly added, and the mixture was stirred at 100°C for 2 hours and then washed 8 times with 1000 ml of n-heptane at 40°C, to obtain a solid catalyst component. The Ti content in the solid catalyst component was measured, and as a result, it was 2.5% by weight.

Preparation of prepolymerization catalyst

In an autoclave having an internal volume of 200 liters, 60 g of the above solid catalyst component, 30.8 ml of triethylaluminum, 10.4 ml of 2-isopropyl-2-isobutyl-1,3-dimethoxysilane and 60 liters of heptane were placed, and the internal temperature was maintained at 5°C. Then, 180 g of propylene was introduced, and the mixture was stirred for 60 minutes to precipitate a solid component. After 120 liters of heptane were added, the supernatant liquid was removed. Then, 161 liters of heptane were added again, and the supernatant liquid was removed. Thereafter, heptane was added so that the total amount of heptane should become 60 liters, to obtain a prepolymerization catalyst slurry (catalyst slurry (1)).

Polymerization

To a loop reactor having an internal volume of 66 liters were continuously fed propylene at a rate of 30 kg/hr, hydrogen at a rate of 205 N-l/hr, the catalyst slurry (1) as a solid catalyst component at a rate of 0.23 g/hr, triethylaluminum at a rate of 2.5 ml/hr and dicyclopentyldimethoxysilane at a rate of 1.3 ml/hr, and polymerization was performed in such

a state that the reactor was full of a liquid without a gas phase. The temperature of the loop reactor was 67°C, and the pressure was 3.6 MPa/G.

The resulting slurry was continuously fed to a vessel reactor having an internal volume of 90 liters to further perform polymerization. To the polymerization reactor were fed propylene at a rate of 15 kg/hr and hydrogen at a rate of 103 N-l/hr. The polymerization was carried out at a temperature of 64°C and a pressure of 3.3 MPa/G.

The dispersion medium of the resulting slurry was gasified to perform gas-solid separation, and then the polypropylene homopolymer powder was continuously fed to a 480-liter gas phase polymerization reactor to perform ethylene/propylene block copolymerization. The polymerization was carried out under the conditions of an ethylene/(ethylene+propylene) ratio of 0.32 (by mol), a hydrogen/(ethylene+propylene) ratio of 0.077 (by mol), a polymerization temperature of 70°C and a pressure of 0.9 MPa/G. Through the above operations, a crystalline propylene block copolymer (A1-1) was obtained.

Preparation Example 2

Preparation of crystalline propylene block copolymer (A1-2)

To a loop reactor having an internal volume of 66 liters were continuously fed propylene at a rate of 30 kg/hr, hydrogen at a rate of 205 N-l/hr, the catalyst slurry (1) as a solid catalyst component at a rate of 0.23 g/hr, triethylaluminum at a rate of 2.5 ml/hr and dicyclopentyldimethoxysilane at a rate of 1.3 ml/hr, and polymerization was performed in such a state that the reactor was full of a liquid without a gas phase. The temperature of the loop reactor was 67°C, and the pressure was 3.6 MPa/G.

The resulting slurry was continuously fed to a vessel reactor having an internal volume of 90 liters to further perform polymerization. To the polymerization reactor were fed propylene at a rate of 15 kg/hr and hydrogen at a rate of 103 N-l/hr. The polymerization was carried out at a temperature of 64°C and a pressure of 3.3 MPa/G.

The dispersion medium of the resulting slurry was gasified to perform gas-solid separation, and then the polypropylene homopolymer powder was continuously fed to a 480-liter gas phase polymerization reactor to perform ethylene/propylene block copolymerization. The polymerization was carried out under the conditions of an ethylene/(ethylene+propylene) ratio of 0.43 (by mol), a hydrogen/(ethylene+propylene) ratio of 0.095 (by mol), a polymerization temperature of 70°C and a pressure of 0.9 MPa/G. Through the above operations, a crystalline propylene block copolymer (A1-2) was obtained.

Preparation Example 3

Preparation of crystalline propylene block copolymer (A1-3)

Preparation of prepolymerization catalyst

In an autoclave having an internal volume of 200 liters, 60 g of the same solid catalyst component as used in Preparation Example 1, 30.8 ml of triethylaluminum, 20.8 ml of 2-isopropyl-2-isobutyl-1,3-dimethoxysilane and 60 liters of heptane were placed, and the internal temperature was maintained at 5°C. Then, 180 g of propylene was introduced, and the mixture was stirred for 60 minutes to precipitate a solid component. After 120 liters of heptane were added, the supernatant liquid was removed. Then, 161 liters of heptane were added again, and the supernatant liquid was removed. Thereafter, heptane was added so that the total amount of heptane should become 60 liters, to obtain a prepolymerization catalyst slurry (catalyst slurry (2)).

Polymerization

To a loop reactor having an internal volume of 66 liters were continuously fed propylene at a rate of 30 kg/hr, hydrogen at a rate of 150 N-l/hr, the catalyst slurry (2) as a solid catalyst component at a rate of 0.23 g/hr, triethylaluminum at a rate of 2.5 ml/hr and ethyl(perhydroxyisoquinolino)dimethoxysilane at a rate of 1.4 ml/hr, and polymerization was performed in such a state that the reactor was full of a liquid without a gas phase. The temperature of the loop reactor was 67°C, and the pressure was 3.6 MPa/G.

The resulting slurry was continuously fed to a vessel reactor having an internal volume of 90 liters to further perform polymerization. To the polymerization reactor were fed propylene at a rate of 15 kg/hr and hydrogen at a rate of 170 N-l/hr. The polymerization was carried out at a temperature of 64°C and a pressure of 3.3 MPa/G.

The dispersion medium of the resulting slurry was gasified to perform gas-solid separation, and then the polypropylene homopolymer powder was continuously fed to a 480-liter gas phase polymerization reactor to perform ethylene/propylene block copolymerization. The polymerization was carried out under the conditions of an ethylene/(ethylene+propylene) ratio of 0.31 (by mol), a hydrogen/(ethylene+propylene) ratio of 0.047 (by mol), a polymerization temperature of 70°C and a pressure of 1.2 MPa/G. Through the above operations, a crystalline propylene block copolymer (A1-3) was obtained.

Preparation Example 4 (Comparative Preparation Example 1)

Preparation of crystalline propylene block copolymer (A1-4)

Polymerization was carried out in the same manner as in Preparation Example 1, except that the pressure in the gas phase polymerization reactor was changed to 0.4 MPa/G and the ethylene/ (ethylene+propylene) ratio in the gas phase polymerization reactor was changed to 0.33 (by mol). Thus, a crystalline propylene block copolymer (A1-4) was obtained.

Preparation Example 5 (Comparative Preparation Example 2)

Preparation of crystalline propylene block copolymer (A1-5)

To a loop reactor having an internal volume of 66 liters were continuously fed propylene at a rate of 30 kg/hr, hydrogen at a rate of 205 N-l/hr, the catalyst slurry (1) as a solid catalyst component at a rate of 0.23 g/hr, triethylaluminum at a rate of 2.5 ml/hr and dicyclopentyldimethoxysilane at a rate of 1.3 ml/hr, and polymerization was performed in such a state that the reactor was full of a liquid without a gas phase. The temperature of the loop reactor was 67°C, and the pressure was 3.6 MPa/G.

The resulting slurry was continuously fed to a vessel reactor having an internal volume of 90 liters to further perform polymerization. To the polymerization reactor were fed propylene at a rate of 15 kg/hr and hydrogen at a rate of 103 N-l/hr. The polymerization was carried out at a temperature of 64°C and a pressure of 3.3 MPa/G.

The dispersion medium of the resulting slurry was gasified to perform gas-solid separation, and then the polypropylene homopolymer powder was continuously fed to a 480-liter gas phase polymerization reactor to perform ethylene/propylene block copolymerization. The polymerization was carried out under the conditions of an ethylene/ (ethylene+propylene) ratio of 0.33 (by mol), a hydrogen/(ethylene+propylene) ratio of 0.077 (by mol), a polymerization temperature of 70°C and a pressure of 1.2 MPa/G. Through the above operations, a crystalline propylene block copolymer (A1-5) was obtained.

Properties of the crystalline propylene block copolymers obtained in the above preparation examples and the comparative preparation examples are set forth in Table 1.

Table 1

| | Prep. Ex. 1 | Prep. Ex. 2 | Prep. Ex. 3 | Comp. Prep. Ex. 1 | Comp. Prep. Ex. 2 |
|---|---|---|---|---|---|
| Crystalline propylene block copolymer | A1-1 | A1-2 | A1-3 | A1-4. | A1-5 |
| Propylene homopolymer portion<br>Pentad fraction (mmmm) | 98.1 | 98.1 | 98. 3 | 98.0 | 98. 1 |
| Room temperature n-decane-soluble portion<br>Soluble portion (wt%) | 23 | 22 | 24 | 10 | 37 |
| Ethylene content (mol%) | 40 | 48 | 41 | 40 | 40 |
| [η] (dl/g) | 2.5 | 2.6 | 2.6 | 2.5 | 2:5 |
| MFR (g/10min | 29 | 30 | 45 | 40 | 8 |

Preparation Example 6

Preparation of crystalline propylene polymer (A2-1) Preparation of prepolymerization catalyst

In an autoclave having an internal volume of 200 liters, 250 g of the same solid catalyst component as used in Preparation Example 1, 32.1 g of triethylaluminum and 125 liters of heptane were placed, and the internal temperature

was maintained at 10°C. Then, 180 g of propylene was introduced, and the mixture was stirred for 30 minutes. Thereafter, 18 g of titanium tetrachloride was added to obtain a prepolymerization catalyst (3).

Polymerization

To a polymerization reactor (1) having an internal volume of 500 liters were continuously fed heptane at a rate of 87 1/hr, the above prepolymerization catalyst (3) as a catalyst at a rate of 9.6 g/hr, triethylaluminum at a rate of 18.2 g/hr and dicyclopentyldimethoxysilane at a rate of 37.2 g/hr, and propylene was fed at a temperature of 60°C substantially in the absence of hydrogen so as to maintain the internal pressure of the polymerization reactor (1) at 0.69 MPa (polymerization of first step). The slurry in the polymerization reactor (1) was sampled out, and the intrinsic viscosity [η] of the polypropylene was measured. As a result, it was 9.1 dl/g.

The resulting slurry was continuously fed to a polymerization reactor (2) having an internal volume of 500 liters to further perform polymerization. To the polymerization reactor (2), heptane was fed at a rate of 32 1/hr, and propylene and hydrogen were continuously fed at a temperature of 70°C so as to maintain the internal pressure of the polymerization reactor (2) at 0.69 MPa and the hydrogen concentration in the gas phase at 10% by volume (polymerization of second step).

From the slurry drawn from the polymerization reactor (2), the unreacted monomers were removed, then heptane was centrifuged in a conventional manner, and the remainder was dried at 80°C and 9.3 MPa for 10 hours to obtain a powdery crystalline propylene polymer (A2-1). The crystalline propylene polymer (A2-1) was obtained at a rate of 80 kg/hr. The crystalline propylene polymer (A2-1) had MFR of 3.1 g/10min, Mw/Mn of 15 and Mz/Mw of 5. The proportion of polypropylene produced by the polymerization of the first step to the crystalline propylene polymer (A2-1) finally obtained was calculated based on the material balance, and as a result, it was 20% by weight.

Preparation Example 7

Preparation of crystalline propylene polymer (A2-2)

Polymerization and drying were carried out in the same manner as in Preparation Example 6, except that in the polymerization of the first step, ethylene and propylene were fed at an ethylene/(ethylene+propylene) ratio of 0.04 (by mol) so as to maintain the internal pressure of the polymerization reactor (1) at 0.69 MPa, and in the polymerization of the second step, propylene and hydrogen were continuously fed so as to maintain the hydrogen concentration in the gas phase at 40% by volume. Thus, a crystalline propylene polymer (A2-2) was obtained. The slurry in the polymerization reactor (1) was sampled out, and the intrinsic viscosity [η] of the propylene/ethylene copolymer was measured. As a result, it was 9.5 dl/g.

The crystalline propylene polymer (A2-2) had MFR of 2.5 g/10min, Mw/Mn of 15, Mz/Mw of 5 and an ethylene content of 1.9% by weight. The proportion of polypropylene produced by the polymerization of the first step was calculated based on the material balance, and as a result, it was 30% by weight.

Preparation Example 8

Preparation of crystalline propylene polymer (A2-3)

Polymerization and drying were carried out in the same manner as in Preparation Example 6, except that the production ratios of the polymers produced in the polymerization reactor (1) and the polymerization reactor (2) were changed. Thus, a crystalline propylene polymer (A2-3) was obtained.

The crystalline propylene polymer (A2-3) had MFR of 0.05 g/10min, Mw/Mn of 13 and Mz/Mw of 6. The proportion of polypropylene produced by the polymerization of the first step to the crystalline propylene polymer (A2-3) finally obtained was calculated based on the material balance, and as a result, it was 65% by weight

The slurry in the polymerization reactor (1) was sampled out, and the intrinsic viscosity [η] of the polypropylene was measured. As a result, it was 9.0 dl/g.

Component B

The following compounds were each used as the component B (elastomeric polymer).

B1: ethylene/1-butene type elastomer (trade name: Tafmer A4050, available from Mitsui Chemicals, Inc., MFR: 6 g/10min)

B2: ethylene/octene type elastomer (trade name: Tafmer H430, available from Mitsui Chemicals, Inc., MFR: 8 g/10min)
B3: ethylene/hexene type elastomer (trade name: Evolue SP0540, available from Mitsui Chemicals, Inc., MFR: 8 g/10min)
B4: styrene type elastomer (trade name: Kraton G1657, available from Shell Chemicals Japan Ltd., MFR: 8 g/10min)

Component C

C1: talc (trade name: HI-FILLER #5000PJ, available from Matsumura Sangyo Co., Ltd. , average particle diameter: 2.2 μm)

Examples, Comparative Examples

The crystalline propylene block copolymer, the elastomeric polymer and the talc shown in Tables 2 and 3 and the following additives and pigments were dry blended by a tumbling mixer and then melt kneaded by a twin-screw kneading extruder (ZSK-30, manufactured by Technovel Corporation) at 210°C to obtain pellets.
The pellets were molded into a specimen by an injection molding machine, and property tests and appearance evaluation of the specimen were carried out. The types of the additives and the pigments used herein and the amounts thereof based on 100 parts by weight of the composition are as follows.

Additives

Irganox 1010 (trade name, available from Ciba Specialty Chemicals): 0.10 part by weight
Irgafos 168 (trade name, available from Ciba Specialty Chemicals): 0.10 part by weight
Sanol LS770 (trade name, available from Sankyo Co., Ltd.): 0.15 part by weight
Chimassorb 944 (trade name, available from Ciba Specialty Chemicals): 0.15 part by weight
Calcium stearate (available from NOF Corporation): 0.10 part by weight

Pigments

Carbon black: 0.30 part by weight
Titanium oxide: 0.05 part by weight

Table 2

| | Ex. 1 | Ex. 2 | Ex. 3 | Ex. 4 | Ex. 5. | Ex. 6 |
|---|---|---|---|---|---|---|
| Composition (part(s) by weight) | | | | | | |
| (A1) component | A1-1 (72) | A1-1 (72) | A1-1 (68) | A1-1 (72) | A1-2 (72) | A1-3 (62) |
| (A2) component | A2-1 (4) | A2-1 (4) | A2-1 (4) | A2-1 (4) | A2-1 (4) | A2-2 (8) |
| (B) component | B1 (4) | B2 (4) | B3 (8) | B4 (4) | B1 (4) | B1 (15) |
| (C) component | C1 (20) | C1 (20) | C1 (20) | C1 (20) | C1 (20) | C1 (15) |
| MFR (g/10min | 25 | 26 | 27 | 27 | 25 | 27 |
| FM (MPa) | 2280 | 2260 | 2350 | 2290 | 2310 | 1550 |
| $IZ_{230-3}$ (J/m) | 351 | 362 | 300 | 405 | 308 | 587 |
| $IZ_{250-30}$ (J/m) | 227 | 232 | 177 | 288 | 172 | 399 |
| HDT (°C) | 125 | 124 | 127 | 123 | 124 | 118 |
| BT (°C) | -4 | -3 | -1 | -5 | -5 | -24 |
| Residence IZ retention ratio $IZ_{250-30}/IZ_{230-3}$ | 0.65 | 0.64 | 0.59 | 0.71 | 0.56 | 0.68 |
| Flow mark occurrence point (cm) | AA | AA | AA | AA | AA | AA |

Table 3

| | Ex. 7 | Ex. 8 | Comp. Ex. 1 | Comp. Ex. 2 | Comp. Ex. 3 | Comp. Ex. 4 |
|---|---|---|---|---|---|---|
| Composition (part(s) by weight)<br>(A1) component<br><br>(A2) component<br><br>(B) component<br><br>(C) component | <br>A1-3<br>(62)<br>A2-1<br>(8)<br>B2<br>(15)<br>C1<br>(15) | <br>A1-1<br>(77)<br>A2-3<br>(1.5)<br>B1<br>(1.5)<br>C1<br>(20) | <br>A1-4<br>(72)<br>A2-1<br>(4)<br>B1<br>(4)<br>C1<br>(20) | <br>A1-4<br>(62)<br>A2-1<br>(4)<br>B1<br>(14)<br>C1<br>(20) | <br>A1-1<br>(76)<br>-<br><br>B1<br>(4)<br>C1<br>(20) | <br>A1-5<br>(75)<br>A2-1<br>(4).<br>B1<br>(1)<br>C1<br>(20) |
| MFR (g/10min | 28 | 22 | 28 | 24 | 29 | 5 |
| FM (MPa) | 1540 | 2270 | 2380 | 2290 | 2210 | 1470 |
| $IZ_{230-3}$ (J/m) | 612 | 328 | 115 | 370 | 383 | 622 |
| $IZ_{250-30}$ (J/m) | 435 | 221 | 56 | 159 | 249 | 441 |
| HDT (°C) | 117 | 124 | 132 | 125 | 122 | 106 |
| BT (°C) | -25 | -2 | >10 | -1 | -4 | -20 |
| Residence IZ retention ratio $IZ_{250-30}/IZ_{230-3}$ | 0.71 | 0.67 | 0.49 | 0.43 | 0.65 | 0.71 |
| Flow mark occurrence point (cm) | AA | AA | AA | AA | BB | BB |

**INDUSTRIAL APPLICABILITY**

The polypropylene resin composition of the present invention has excellent mechanical properties, and from the composition, molded articles having excellent appearance such as free from flow mark or weld mark can be obtained. Therefore, the polypropylene resin composition can be favorably used as a material for automobile parts, etc., and its industrial value is high.

**Claims**

**1.** A polypropylene resin composition comprising:

(A) a crystalline propylene block copolymer in an amount of 94 to 55% by weight, which comprises (d1) a room temperature n-decane-insoluble portion and (d2) a room temperature n-decane-soluble portion, and a content of the room temperature n-decane-soluble portion (d2) is 15 to 35% by weight, and has a melt flow rate (ASTM D 1238, measured at 230°C under a load of 2160 g) in the range of 5 to 80 g/10min,
(B) an elastomeric polymer in an amount of 1 to 20% by weight, and
(C) an inorganic filler in an amount of 5 to 25% by weight;

and having the following properties:

a ratio of an Izod impact strength (J/m, $IZ_{250-30}$) of a specimen obtained by maintaining the composition at 250°C for 30 minutes in a molten state in a 10 oz injection molding machine and then molding the composition in accordance with the method of ASTM D 256, said Izod impact strength being measured after 48 hours from the molding, to an Izod impact strength (J/m, $IZ_{230-3}$) of a specimen obtained by maintaining the composition at 230°C for 3 minutes in a molten state in the same injection molding machine and then molding the composition by the same method, said Izod impact strength being measured after 48 hours from the molding, satisfies the following formula:

$$1.0 \geq (IZ_{250-30}/IZ_{230-3}) \geq 0.5.$$

**2.** The polypropylene resin composition as claimed in claim 1, wherein the room temperature n-decane-insoluble portion (d1) has a melt flow rate (ASTM D 1238, measured at 230°C under a load of 2160 g) in the range of 10 to 300 g/10min and Mz/Mw (Mz: Z average molecular weight, Mw: weight-average molecular weight), as measured by a gel permeation chromatograph (GPC) method, of not less than 3.0.

**3.** The polypropylene resin composition as claimed in claim 1 or 2, wherein the room temperature n-decane-insoluble portion (d1) comprises (a-1) a high-molecular weight polypropylene having an intrinsic viscosity [η], as measured in decalin at 135°C, of 6 to 13 dl/g, in an amount of 0.5 to 10% by weight, and (a-2) a low-molecular weight polypropylene having an intrinsic viscosity [η], as measured in decalin at 135°C, of less than 6 dl/g, in an amount of 99.5 to 90% by weight.

**4.** The polypropylene resin composition as claimed in any one of claims 1 to 3, wherein the room temperature n-decane-insoluble portion (d1) has an isotactic pentad fraction (mmmm), as measured by $^{13}C$-NMR, of not less than 97%.

**5.** The polypropylene resin composition as claimed in any one of claims 1 to 4, wherein the room temperature n-decane-soluble portion (d2) is a propylene/ethylene random copolymer having an ethylene content of 20 to 50% by mol and an intrinsic viscosity [η], as measured in decalin at 135°C, in the range of 1 to 5 dl/g.

**6.** The polypropylene resin composition as claimed in claim 1, wherein the crystalline propylene block copolymer (A) is a composition of (A-1) a crystalline propylene block copolymer in an amount of 99.5 to 80% by weight and (A-2) a propylene homopolymer and/or (A-3) a propylene random copolymer in an amount of 0.5 to 20% by weight.

**7.** The polypropylene resin composition as claimed in claim 6, wherein the propylene homopolymer (A-2) and the propylene random copolymer (A-3) are each a composition comprising:

(a-1) high-molecular weight polypropylene having an intrinsic viscosity [η], as measured in decalin at 135°C, of 6 to 13 dl/g, in an amount of 10 to 80% by weight, and
(a-2) low-molecular weight polypropylene having an intrinsic viscosity [η], as measured in decalin at 135°C, of less than 6 dl/g, in an amount of 90 to 20% by weight.

**8.** The polypropylene resin composition as claimed in claim 7, wherein the propylene homopolymer (A-2) and the propylene random copolymer (A-3) are each a composition comprising:

(a-1) high-molecular weight polypropylene having an intrinsic viscosity [η], as measured in decalin at 135°C, of 6 to 13 dl/g, in an amount of 10 to 35% by weight, and
(a-2) low-molecular weight polypropylene having an intrinsic viscosity [η], as measured in decalin at 135°C, of less than 6 dl/g, in an amount of 90 to 65% by weight.

**9.** The polypropylene resin composition as claimed in claim 6, wherein the crystalline propylene block copolymer (A-1) comprises (d1) a room temperature n-decane-insoluble portion and (d2) a room temperature n-decane-soluble portion, and a content of the room temperature n-decane-soluble portion (d2) is 17 to 35% by weight, and has a melt flow rate (ASTM D 1238, measured at 230°C under a load of 2160 g) in the range of 10 to 100 g/10min.

**10.** The polypropylene resin composition as claimed in any one of claims 1 to 9, wherein the elastomeric polymer (B) is a copolymer of ethylene and an α-olefin of 4 to 10 carbon atoms.

**11.** The polypropylene resin composition as claimed in any one of claims 1 to 10, wherein the elastomeric polymer (B) has a melt flow rate (ASTM D 1238, measured at 230°C under a load of 2160 g) of 0.5 to 30 g/10min.

**12.** The polypropylene resin composition as claimed in any one of claims 1 to 11, wherein the inorganic filler (C) is talc.

## Patentansprüche

1. Polypropylenharz-Zusammensetzung, umfassend:

   (A) ein kristallines Propylen-Blockcopolymer in einer Menge von 94 bis 55 Gew.%, das (d1) einen bei Raumtemperatur in n-Decan unlöslichen Anteil und (d2) einen bei Raumtemperatur in n-Decan löslichen Anteil umfasst, wobei der Gehalt des bei Raumtemperatur in n-Decan löslichen Anteils (d2) 15 bis 35 Gew.% ist, und das eine Schmelzflussrate (ASTM D 1238, gemessen bei 230°C unter einer Last von 2.160 g) im Bereich von 5 bis 80 g/10 min hat,
   (B) ein elastomeres Polymer in einer Menge von 1 bis 20 Gew.%, und
   (C) einen anorganischen Füllstoff in einer Menge von 5 bis 25 Gew.%;

   mit den folgenden Eigenschaften:

   dass das Verhältnis der Izod-Schlagfestigkeit (J/m, $IZ_{250-30}$) einer Probe, die erhalten wird, indem die Zusammensetzung in einer 10 oz-Spritzgussmaschine bei 250°C 30 Minuten lang im geschmolzenen Zustand gehalten und dann nach dem Verfahren gemäss ASTM D 256 gegossen wird, wobei die Izod-Schlagfestigkeit 48 Stunden nach dem Giessen gemessen wird, zur Izod-Schlagfestigkeit (J/m, $IZ_{230-3}$) einer Probe, die erhalten wird, indem die Zusammensetzung in der gleichen Spritzgussmaschine bei 230°C 3 Minuten lang im geschmolzenen Zustand gehalten und dann nach dem gleichen Verfahren gegossen wird und die Izod-Schlagfestigkeit 48 Stunden nach dem Giessen gemessen wird, der folgenden Formel genügt:

$$1,0 \geq (IZ_{250-30}/IZ_{230-3}) \geq 0,5.$$

2. Polypropylenharz-Zusammensetzung gemäss Anspruch 1, worin der bei Raumtemperatur in n-Decan unlösliche Anteil (d1) eine Schmelzflussrate (ASTM D 1238, gemessen bei 230°C unter einer Last von 2.160 g) im Bereich von 10 bis 300 g/10 min und ein Mz/Mw (Mz: Z-gemitteltes Molekulargewicht, Mw: gewichtsgemitteltes Molekulargewicht), gemessen mittels Gelpermeationschromatografieverfahren (GPC), von nicht weniger als 3,0 hat.

3. Polypropylenharz-Zusammensetzung gemäss Anspruch 1 oder 2, worin der bei Raumtemperatur in n-Decan unlösliche Anteil (d1) ein Polypropylen mit hohem Molekulargewicht (a-1), das eine in Decalin bei 135°C gemessene intrinsische Viskosität [η] von 6 bis 13 dl/g hat, in einer Menge von 0,5 bis 10 Gew.%, und (a-2) ein Polypropylen mit niedrigem Molekulargewicht, das eine in Decalin bei 135°C gemessene intrinsische Viskosität [η] von weniger als 6 dl/g hat, in einer Menge von 99,5 bis 90 Gew.% umfasst.

4. Polypropylenharz-Zusammensetzung gemäss mindestens einem der Ansprüche 1 bis 3, worin der bei Raumtemperatur in n-Decan unlösliche Anteil (d1) einen durch $^{13}C$-NMR gemessenen isotaktischen Pentadanteil (mmmm) von nicht weniger als 97 % hat.

5. Polypropylenharz-Zusammensetzung gemäss mindestens einem der Ansprüche 1 bis 4, worin der bei Raumtemperatur in n-Decan lösliche Anteil (d2) ein Propylen-Ethylen-Zufallscopolymer mit einem Ethylenanteil von 20 bis 50 mol-% und einer in Decalin bei 135°C gemessenen intrinsischen Viskosität [η] im Bereich von 1 bis 5 dl/g ist.

6. Polypropylenharz-Zusammensetzung gemäss Anspruch 1, worin das kristalline Propylen-Blockcopolymer (A) eine Zusammensetzung aus (A-1) einem kristallinen Propylen-Blockcopolymer in einer Menge von 99,5 bis 80 Gew.% und (A-2) einem Propylen-Homopolymer und/oder (A-3) einem Propylen-Zufallscopolymer in einer Menge von 0,5 bis 20 Gew.% ist.

7. Polypropylenharz-Zusammensetzung gemäss Anspruch 6, worin das Propylen-Homopolymer (A-2) und das Propylen-Zufallscopolymer (A-3) jeweils Zusammensetzungen sind, die umfassen:

   (a-1) ein Polypropylen mit hohem Molekulargewicht, das eine in Decalin bei 135°C gemessene intrinsische Viskosität [η] von 6 bis 13 dl/g hat, in einer Menge von 10 bis 80 Gew.%, und
   (a-2) ein Polypropylen mit niedrigem Molekulargewicht, das eine in Decalin bei 135°C gemessene intrinsische Viskosität [η] von weniger als 6 dl/g hat, in einer Menge von 90 bis 20 Gew.%.

8. Polypropylenharz-Zusammensetzung gemäss Anspruch 7, worin das Propylen-Homopolymer (A-2) und das Propylen-Zufallscopolymer (A-3) jeweils Zusammensetzungen sind, die umfassen:

(a-1) ein Polypropylen mit hohem Molekulargewicht, das eine in Decalin bei 135°C gemessene intrinsische Viskosität [η] von 6 bis 13 dl/g hat, in einer Menge von 10 bis 35 Gew.%, und
(a-2) ein Polypropylen mit niedrigem Molekulargewicht, das eine in Decalin bei 135°C gemessene intrinsische Viskosität [η] von weniger als 6 dl/g hat, in einer Menge von 90 bis 65 Gew.%.

9. Polypropylenharz-Zusammensetzung gemäss Anspruch 6, worin das kristalline Propylen-Blockcopolymer (A-1) einen bei Raumtemperatur in n-Decan unlöslichen Anteil (d1) und einen bei Raumtemperatur in n-Decan löslichen Anteil (d2) umfasst, wobei der Anteil des bei Raumtemperatur in n-Decan löslichen Anteils (d2) 17 bis 35 Gew.% ist, und das eine Schmelzflussrate (ASTM D 1238, gemessen bei 230°C unter einer Last von 2.160 g) im Bereich von 10 bis 100 g/10 min hat.

10. Polypropylenharz-Zusammensetzung gemäss mindestens einem der Ansprüche 1 bis 9, worin das elastomere Polymer (B) ein Copolymer aus Ethylen und einem α-Olefin mit 4 bis 10 Kohlenstoffatomen ist.

11. Polypropylenharz-Zusammensetzung gemäss mindestens einem der Ansprüche 1 bis 10, worin das elastomere Polymer (B) eine Schmelzflussrate (ASTM D 1238, gemessen bei 230°C unter einer Last von 2.160 g) von 0,5 bis 30 g/10 min hat.

12. Polypropylenharz-Zusammensetzung gemäss mindestens einem der Ansprüche 1 bis 11, worin der anorganische Füllstoff (C) Talk ist.

## Revendications

1. Composition de résine de polypropylène comprenant :

(A) un copolymère bloc de propylène cristallin en une quantité de 94 à 55 % en poids, qui comprend (d1) une partie insoluble dans le n-décane à température ambiante et (d2) une partie soluble dans le n-décane à température ambiante, et une teneur de la partie soluble dans le n-décane à température ambiante (d2) étant de 15 à 35 % en poids, et qui a un indice de fluidité à chaud(ASTM D 1238, mesuré à 230 °C sous une charge de 2160 g) dans la plage de 5 à 80 g/10min,
(B) un polymère élastomère en une quantité de 1 à 20 % en poids, et
(C) une charge de remplissage inorganique en une quantité de 5 à 25 % en poids ;

et ayant les propriétés suivantes :

le rapport d'une résistance au choc Izod (J/m, $IZ_{250-30}$) d'un échantillon obtenue en maintenant la composition à 250 °C pendant 30 minutes dans un état fondu dans une machine de moulage par injection de 10 oz et en moulant ensuite la composition selon le procédé ASTM D 256, ladite résistance au choc Izod étant mesurée après 48 heures de moulage, sur une résistance au choc Izod (J/m, $IZ_{230-3}$) d'un échantillon obtenu en maintenant la composition à 230 °C pendant 3 minutes dans un état fondu dans la même machine de moulage par injection et en moulant ensuite la composition par le même procédé, ladite résistance au choc Izod étant mesurée après 48 heures de moulage, satisfait à la formule suivante :

$$1,0 \geq (IZ_{250-30} / IZ_{230-3}) \geq 0,5$$

2. Composition de résine de polypropylène selon la revendication 1, dans laquelle la partie insoluble dans le n-décane à température ambiante (d1) a un indice de fluidité à chaud(ASTM D 1238, mesuré à 230 °C sous une charge de 2160 g) dans la plage de 10 à 300 g/10min et Mz / Mw (Mz : Z masse moléculaire moyenne, Mw : masse moléculaire moyenne en poids), tel que mesuré par un procédé de chromatographie par perméation de gel (GPC), non inférieur à 3,0.

3. Composition de résine de polypropylène selon la revendication 1 ou 2, dans lequel la partie insoluble dans le n-décane à la température ambiante (d1) comprend (a-1) un polypropylène de masse moléculaire élevée ayant une viscosité intrinsèque [η], telle que mesurée dans de la décaline à 135 °C, de 6 à 13 dl/g, en une quantité de 0,5 à 10 % en poids et (a-2) un polypropylène de faible masse moléculaire ayant une viscosité intrinsèque [η], telle que mesurée dans de la décaline à 135 °C, inférieure à 6 dl/g, en une quantité de 99,5 à 90 % en poids.

**4.** Composition de résine de polypropylène selon l'une quelconque des revendications 1 à 3, dans laquelle la partie insoluble dans le n-décane à température ambiante (d1) a une fraction de pentades isotactiques (mmmm), telle que mesurée par $^{13}C$-NMR, non inférieure à 97 %.

**5.** Composition de résine de polypropylène selon l'une quelconque des revendications 1 à 4, dans laquelle la partie soluble dans le n-décane à température ambiante (d2) est un copolymère statistique de propylène / éthylène ayant une teneur en éthylène de 20 à 50 % en mole et une viscosité intrinsèque [η], telle que mesurée dans de la décaline à 135 °C, dans la plage de 1 à 5 dl/g.

**6.** Composition de résine de polypropylène selon la revendication 1, dans laquelle le copolymère bloc de propylène cristallin (A) est une composition (A-1) d'un copolymère bloc de propylène cristallin en une quantité de 99,5 à 80 % en poids et (A-2) d'un homopolymère de propylène et/ou (A-3) d'un copolymère statistique de propylène en une quantité de 0,5 à 20 % en poids.

**7.** Composition de résine de polypropylène selon la revendication 6, dans laquelle l'homopolymère de propylène (A-2) et le copolymère statistique de propylène (A-3) sont chacun une composition comprenant :

(a-1) un polypropylène de masse moléculaire élevée ayant une viscosité intrinsèque [η], telle que mesurée dans de la décaline à 135 °C, de 6 à 13 dl/g, en une quantité de 10 à 80 % en poids, et
(a-2) un polypropylène de faible masse moléculaire ayant une viscosité intrinsèque [η], telle que mesurée dans de la décaline à 135 °C, inférieure à 6 dl/g, en une quantité de 90 à 20 % en poids.

**8.** Composition de résine de polypropylène selon la revendication 7, dans laquelle l'homopolymère de propylène (A-2) et le copolymère statistique de propylène (A-3) sont chacun une composition comprenant :

(a-1) un polypropylène de masse moléculaire élevée ayant une viscosité intrinsèque [η], telle que mesurée dans de la décaline à 135 °C, de 6 à 13 dl/g, en une quantité de 10 à 35 % en poids, et
(a-2) un polypropylène de faible masse moléculaire ayant une viscosité intrinsèque [η], telle que mesurée dans de la décaline à 135 °C, inférieure à 6 dl/g, en une quantité de 90 à 65 % en poids.

**9.** Composition de résine de polypropylène selon la revendication 6, dans laquelle le copolymère bloc de propylène cristallin (A-1) comprend (d1) une partie insoluble dans le n-décane à température ambiante et (d2) une partie soluble dans le n-décane à température ambiante, et une teneur de la partie soluble dans le n-décane à température ambiante (d2) étant de 17 à 35 % en poids, et qui a un indice de fluidité à chaud(ASTM D 1238, mesuré à 230 °C sous une charge de 2160 g) dans la plage de 10 à 100 g/10min.

**10.** Composition de résine de polypropylène selon l'une quelconque des revendications 1 à 9, dans laquelle le polymère élastomère (B) est un copolymère d'éthylène et une $\alpha$-oléfine de 4 à 10 atomes de carbone.

**11.** Composition de résine de polypropylène selon l'une quelconque des revendications 1 à 10, dans laquelle le polymère élastomère (B) a un indice de fluidité à chaud(ASTM D 1238, mesuré à 230 °C sous une charge de 2160 g) de 0,5 à 30 g/10min.

**12.** Composition de résine de polypropylène selon l'une quelconque des revendications 1 à 11, dans laquelle la charge inorganique (C) est du talc.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9227735 A
- JP 2003253084 A
- EP 0881259 A
- EP 1302508 A
- EP 0792914 A